# EUROPEAN PATENT APPLICATION

(11) **EP 4 821 389 A1**
(43) Date of publication of application: **14.10.2026**
(21) Application number: 26171607.0
(22) Date of filing: 10.04.2026
(51) Int. Cl.: A43B 13/12, A43B 13/02, A43B 13/18, B29D 35/12, B29D 35/14

(54) **PARTICLE FOAM ARTICLE AND METHOD OF MANUFACTURE**

(30) Priority: 10.04.2025 US 202519175234
(71) Applicant: adidas AG, 91074 Herzogenaurach (DE)
(72) Inventor: HANSON, Henry Niles, 91074 Herzogenaurach (DE); GRAHAM, Martin William, 91074 Herzogenaurach (DE); SCHMITT, Matthias, 91074 Herzogenaurach (DE)
(74) Representative: Bardehle Pagenberg Partnerschaft mbB Patentanwälte Rechtsanwälte

(57) **Abstract**

Described are methods for the manufacture of a article, in particular a particle foam article for sports apparel, an article manufactured with such a method, for example a midsole or a part of a shoe, and a shoe with such a midsole. According to an aspect of the invention, a method for the manufacture of an article, in particular a cushioning article for sports apparel, is provided which includes placing one or more elements into a mold between a first portion and a second portion of the mold, closing a securing component of the mold, where the securing component, mold portions, and/or element(s) define a cavity, loading particles into the cavity on one or more sides of the element(s), moving the first portion and the second portion of the mold into a closed position, and fusing the particles.

## Description

### INCORPORATION BY REFERENCE

The foregoing applications, and all documents cited therein or during their prosecution ("appln cited documents") and all documents cited or referenced in the appln cited documents, and all documents cited or referenced herein ("herein cited documents"), and all documents cited or referenced in herein cited documents, together with any manufacturer's instructions, descriptions, product specifications, and product sheets for any products mentioned herein or in any document incorporated by reference herein, are hereby incorporated herein by reference, and may be employed in the practice of the invention. More specifically, all referenced documents are incorporated by reference to the same extent as if each individual document was specifically and individually indicated to be incorporated by reference.

### FIELD OF THE INVENTION

The present invention relates to particle foam articles and a method for creating particle foam articles. In particular, elements may be selectively placed in foam articles. Elements positioned within an article may include one or more of support structures including rods, torsion bars, plates, cages, frames, and/or caps, textiles, films, foils, strands, filaments, external object engagers for objects that may be coupled to the article such that a portion of the object extends beyond an external surface of the article such as spikes (e.g., running spikes and/or decorative spikes), clips (e.g. bicycle clips), bindings, friction components, pads, springs, ports, decorative items such as charms, buckles, or the like, electronic components such as transmitters, electrodes, sensors such as optical sensors, pressure sensors, gyroscopes, accelerometers, or the like, displays, control panels, lights, LEDs, batteries, or the like, conductive elements such as wires, bands, sheets, or the like, shielding elements, for example, elements that protect another element or portion of the midsole from detrimental environmental conditions (e.g., heat, moisture, and/or pressure during the formation process), cushioning elements such as spring elements, pads, bladders or the like, tags such as near field communication tags, chips, or the like, and/or combinations thereof. For example, a shoe midsole may include one or more elements positioned therein. The method includes utilizing a double-sided crack or multi-sided crack process to ensure that the foam on each side of a portion of an element positioned within the article receives proper compression and/or fusion.

### BACKGROUND

Citation or identification of any document in this application is not an admission that such document is available as prior art to the present invention.

Shoes are provided with properties which, according to the specific type of the shoe, may vary in their effect. Parts of shoes such as midsoles may have a protective function. Shoe midsoles may provide stability. Moreover, a midsole may have a cushioning effect, so as to, e.g., absorb the forces emerging from the contact of the shoe with the ground.

Conventional manufacturing methods for foam articles such as midsoles include utilizing foam particles, or pellets, in conjunction with a particle foam consolidation process to form articles from particle foam. Historically, a particle foam consolidation process uses steam chest molding. Currently used methods involve filling a cavity with pellets and compressing a portion of the cavity to create a compression force on the pellets.

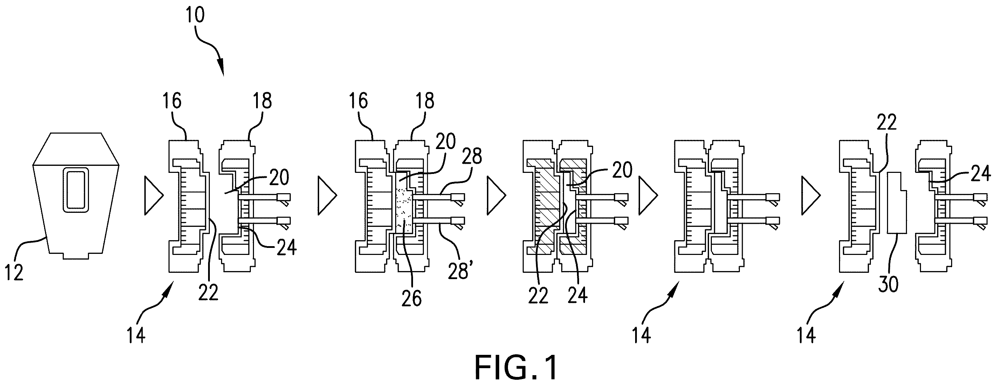

FIG. 1 depicts a typical process 10 for molding a midsole for a shoe. Traditional steam molding includes loading material to a hopper vessel 12, providing a mold 14 including mold portions 16, 18 that define a mold cavity 20 in the shape of the desired article, closing the mold 14 that includes mold surfaces 22, 24 and filling the mold cavity 20 with the material (e.g., particle foam) 26 to be molded through inlets 28, 28', steaming the material within the mold 14, cooling and stabilizing the steamed material and demolding such that the molded article 30 separates from the mold surfaces 22, 24.

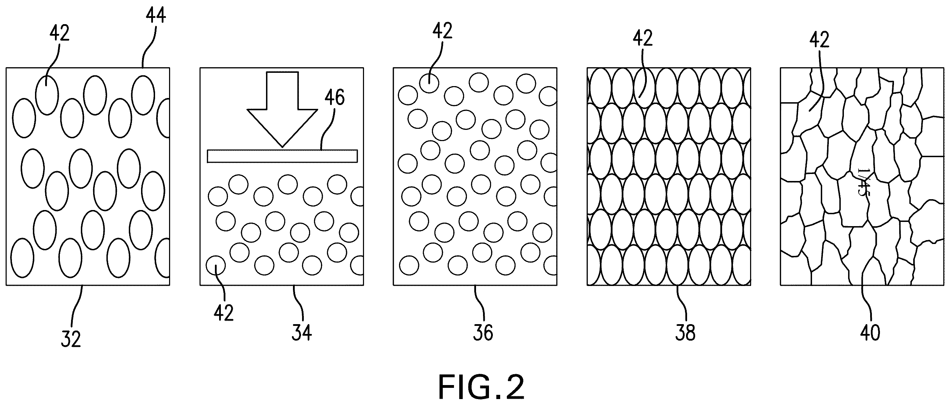

FIG. 2 depicts stages 32, 34, 36, 38, 40 of a conventional process. Loading 32 includes adding particles 42 to the mold 44 under atmospheric pressure. Pressurizing 34 involves applying pressure to the particles 42 such that the particles are pressurized within the mold by reducing a volume in the mold using a moveable part 46. Additional loading 36 of particles 42 occurs under pressure. Depressurization 38 allows particles 42 to expand. Fusion 40 of particles 42 occurs upon application of steam. As shown, portions of the surfaces of the particles 42 are melted such that the particles bond to each other forming a granular but closed foam structure.

When elements are added to particle foam articles it makes the formation of the particle foam articles more complex. Incorporating elements into an article formed from particle foam may include placing elements on an external surface of the foamed article, partially embedded within the foamed article, or completely embedded in the foamed article.

One disadvantage of the functional elements and midsole configurations known from the prior art is that the midsole and any elements added thereto generally have to be manufactured separately and have to be bonded, e.g., glued together. For example, use of additional elements in a foamed article may require the use of additional materials such as adhesives, glues, or the like. In such instances, materials are selected for their ability to bond to each other. This restricts the selection of materials and hence the design possibilities of the midsole and the shoe significantly. In such instances, to place an element in the foamed article the article is generally formed in 2 or more pieces and the element is coupled to the article.

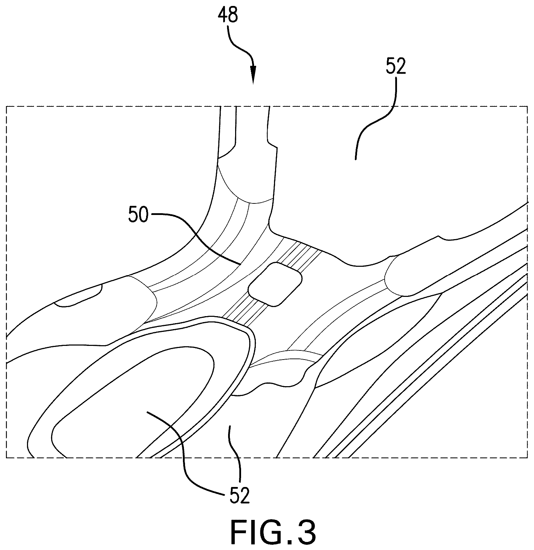

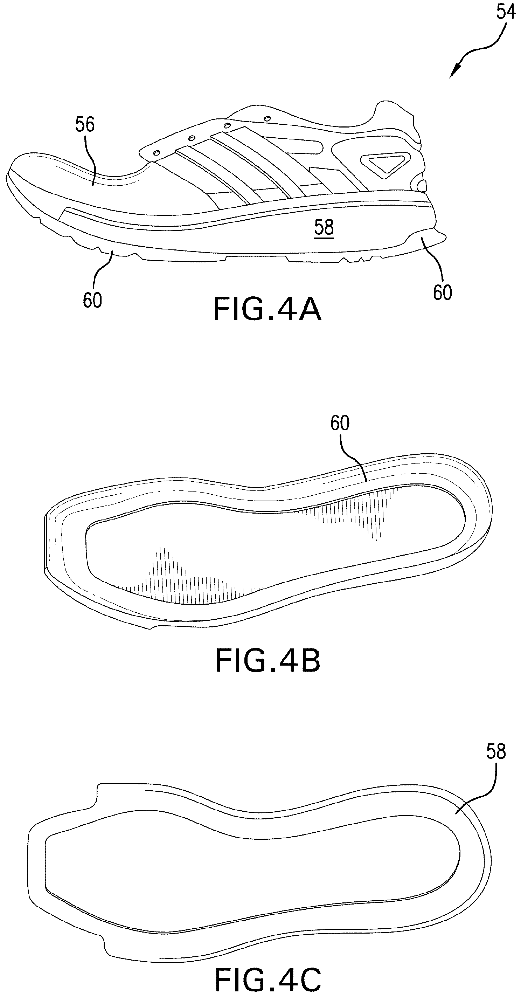

FIGs. 3-4 show conventional examples of adding elements to particle foam midsoles. In particular, FIG. 3 shows a sole 48 with a reinforcing element 50, which is glued on the material 52 of the sole. Such constructions have disadvantages. On one hand, these constructions are limited to materials that may be bonded together, and particularly glued together. The necessity of a bond between the materials increase the manufacturing effort and the number of materials such as bonding agents required. A further example of a conventional shoe is shown in FIGs. 4A-4C, a conventional shoe 54 includes upper 56, midsole 58, and outsole 60. As shown in both FIGs. 3-4 the elements added to the midsoles are positioned on the exterior of the midsoles.

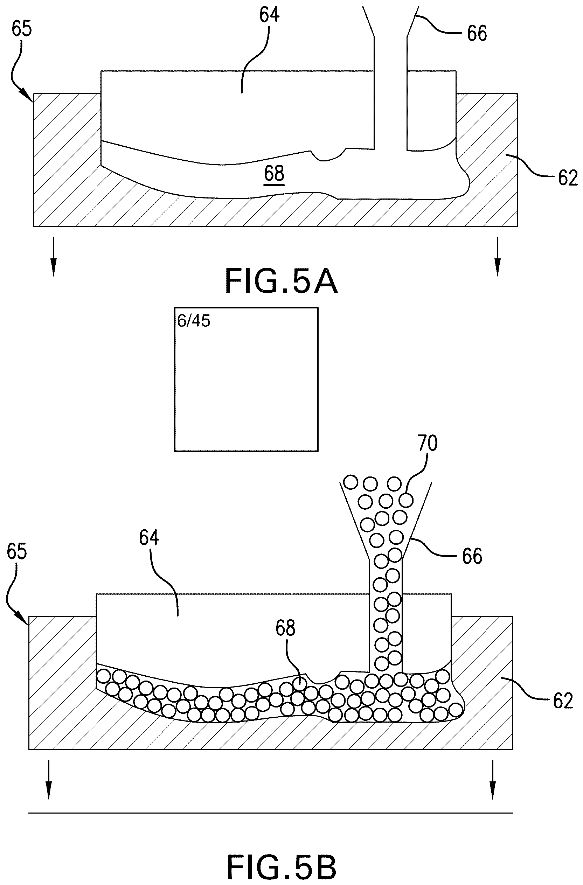

To reduce and/or eliminate processing steps in the formation of articles particle foams may be molded with elements positioned within the molds. For example, elements may be positioned in a mold as shown in FIGs. 5A-5C which depict conventional methods of forming midsoles from particle foams. As shown in FIG. 5A a traditional mold 65 having stationary mold portion 62 and moving mold portion 64. An inlet 66 for loading the particle foam materials is shown that communicates with a mold cavity 68. FIG. 5B depicts the loading of the particle foam material 70 into the mold cavity 68 using inlet 66.

As stated previously, adding elements to foamed articles such as midsoles generally occurs on outer surfaces of the foamed articles. Adding elements to foamed articles during the formation process is complex. While these elements may improve the mechanical properties of the articles, positioning them within a portion of an article complicates delivery of particle foam, application of energy, and/or fusion of the particles. For example, adding elements such as a plate, rod, or textile may inhibit particle motion within a mold cavity and/or or cause uneven compression during molding.

In conventional processes, elements may be positioned between separately formed particle foam articles and secured using a post processing method. For example, elements could be secured using adhesives, films, or the like.

In contrast, incorporating an element in the formation process may inhibit delivery of particles into parts of a mold cavity. Further, the delivery of the particles and/or movement of the mold portions may affect a positioning of an element during the formation process.

The present disclosure addresses these problems.

### SUMMARY

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

Articles described herein may be formed from particles of an expanded material. Foamed articles may include sections of particle foam having different values for properties of interest. For example, a first section of a particle foam may have a first value for a predetermined property while a second section of particle foam may have a second value for a predetermined property. Predetermined properties may include density, strength, stiffness such as a bending stiffness or a compression stiffness, energy return, cushioning, rigidity, bonding properties, abrasion resistance, weight and/or a deformation characteristics. In some instances, an element may be positioned at least partially between particle foam sections. For example, an element may be positioned at least partially between a first particle foam section and a second particle foam section. Particle foam sections may be coupled to each other by fused particles. In some instance, the particle foam sections may be coupled to the element by fused particles. Alternately, the element may be independent of a foam section. For example, an embodiment may include an element that is not coupled to a foam section. Further, in some embodiments portions of elements may not be coupled to the foam sections.

Particle foam articles described herein may have predetermined levels of fusion. In a particle foam article, a desirable level of fusion may be determined by considering desired properties of the particle foam article, use of the article, characteristics of the user, material properties, and/or process parameters. Measuring a level of fusion in a particle foam material may involve measuring properties like tear strength, split tear, energy return, and/or inspection of the particle foam material using microscopy.

Midsoles may include particle foam having a predetermined level of fusion. In some embodiments, midsoles may include particle foam sections having a predetermined level of fusion. Levels of fusion in a finished midsole and/or sections thereof may be measured by analyzing specific properties of the midsoles, for example, tear strength, a split tear test, energy return, and/or inspection of the particle foam material using microscopy.

In particular, sports shoes may include midsoles formed from particles of an expanded material and one or more elements positioned on, proximate, or within the midsole. In some instances, a midsole may include one or more particle foam sections having different pre-determined properties. For example, a midsole may include a particle foam section having a first value for a predetermined property and a particle foam section having a second value for a predetermined property. Predetermined properties may include density, stiffness such as bending stiffness or compression stiffness, energy return, rigidity, bonding properties, cushioning properties, abrasion resistances, weight, color, transparency, and/or a deformation characteristics.

An element may be positioned proximate at least one of the particle foam sections. In some instances, a portion of the element is positioned within at least one of the particle foam sections. Elements or portions thereof may be positioned at an interface between the particle foam sections. Elements positioned within a midsole may include one or more of support structures including rods, torsion bars, plates, cages, frames, and/or caps, textiles, films, foils, strands, filaments, external object engagers for devices that may be coupled to the article such that a portion of the device extends beyond an external surface of the article such as spikes, clips (e.g. bicycle clips), bindings, friction components, pads, springs, or other devices, electronic components such as transmitters, electrodes, sensors such as optical sensors, pressure sensors, gyroscopes, accelerometers, or the like, displays, control panels, LEDs, batteries, or the like, conductive elements such as wires, bands, sheets, or the like, shielding elements, for example, elements that protect another element or portion of the midsole from detrimental environmental conditions (e.g., heat, moisture, and/or pressure during the formation process), cushioning elements such as spring elements, pads, bladders or the like, tags such as near field communication tags, chips, or the like, and/or combinations thereof. For example, a textile may be combined with a plate in a midsole.

In some instances, midsoles may include multiple elements. For example, a midsole may include one or more plates positioned at a mold interface of differing particle foam sections. Further, in some embodiments various combinations of elements may be used including a plate and a sensor.

Articles formed from foam particles may include multiple elements in various configurations. In some embodiments, an element and a shielding element may be used in a portion of an article. For example, in some embodiments, an article may include an element that may be sensitive to one or more of heat, water, pressure, and/or electromagnetic fields. In these instances, it may be desirable to use a shielding element that reduces a chance of and/or inhibits contact between a sensitive element and at least one of heat, water, pressure, and/or electromagnetic fields. For example, in a midsole a first element (i.e., sensitive element) may be positioned proximate a shielding element within the midsole such that the shielding element reduces and/or prevents exposure of the first element to heat, water, pressure, and/or electromagnetic fields.

Some embodiments may include particle foam articles that have voids positioned in predetermined location in the article. For example, a midsole may have one or more voids in the particle foam. Positioning and geometries of voids may provide a way to create zones of predetermined characteristics within an article. In some instances, voids may provide access to elements within an article.

Manufacturing an article from foam particles may include placing an element that includes engaging structures into a mold between portions of the mold. A securing component may be positioned proximate the element in the mold to maintain a position of the element. By securing the element this may reduce and/or inhibit movement of the element or elements. For example, a securing component may secure a plate during the manufacturing process.

During loading particles may be loaded into a molding cavity using a space between a mold portion and the element. In some cases, there is a space on either side of the element where particles may be loaded. For example, "spaces" may be positioned on either side of a plate between the plate and the molding portion.

After loading of the particles mold portions may be moved into a closed position. Once mold portions have been moved to a position that allows for a desired compression of the particles, energy may be provided to the mold such that at least a portion of the particles are fused.

Mold portions may move independently of each other. Further, the mold portions may move independently with respect to the securing component and an element. For example, mold portions may move independently of a plate positioned between them.

Mold portions may include members that engage the element. For example, mold portions may have indentations, ledges, or pins that engage sections of a plate. Members on a mold portion may engage engaging structures located on an element. For example, engaging structures may be positioned on outer and/or inner sections of an element. In particular, a plate for use in a midsole may include engaging structures such as tabs and/or openings on both inner and outer sections on at least one of an outer portion of the element or an inner portion of the element.

In some embodiments members may be used to influence a geometry of an article during formation. For example, members may include a geometry that will create a void having a predetermined size, shape, and/or location in order to impart particular features to an article. In particular, a pin may have a geometry that creates a void in a midsole that corresponds to a specific geometry that imparts particular properties to a region of a midsole. Specifically, voids in the form of columns may be used to control cushioning properties of a region of a midsole.

A securing component may be formed from one or more parts. Materials used in securing components may include but are not limited to metals such as steel, aluminum, etc. In particular, metal securing components may be used in applications that utilize steam as the energy source for molding and/or fusion. In alternate embodiments where the energy source is electromagnetic radiation it may be desirable to use materials suitable for use. For example, if electromagnetic radiation is used such as microwave or radio frequency heating it may be desirable to utilize a securing component formed from polytetrafluoroethylene ("PTFE").

In a particular instance, the securing component may have the form of a rim, or clamp. Some instances of the securing component may include multiple rims. The rim as used herein may refer to a circular element that is formed from a metal material. The rim may include features that engage elements for use in an article or midsole. For example, rims may be configured to couple to engaging structures on plates that are used in midsoles. In some instances, one or more rims may be used to secure a textile, foil, or film element.

In some instances, mold portions may include pins to position an element. For example, pins in a mold portion may be used to position a plate by engaging an engaging structure of the plate. In particular, pins may engage holes in the plate that are positioned such that the pins align the plate in a desired position between mold portions. Portions of the mold may move independently of the plate as the plate is held in place by both the securing component and the pins in the mold portion.

Mold portions may be moved into a closed position prior to application of the energy to the mold. In some instances, prior to moving the mold portions a primer is added to the mold portions. In some instances, a primer is added to the mold portions prior to loading the foam particles.

After mold portions are moved into the desired positions, energy may be provided to the mold portions using at least one of heated steam or electromagnetic radiation.

In some instances, a surface of the one or more of the mold portions may be porous. For example, each of the mold portions may have a porous surface through which steam may enter the mold cavity. The porous surface may allow for a more consistent application of steam to the particles in the mold.

In some instances, elements for use in the mold portions may be held in place by use of a vacuum. For example, negative pressure may be applied to a porous mold portion allowing an element such as a textile to be positioned proximate the mold portion. In this way, an element may be held in place in a mold using vacuum pressure.

In some embodiments, one or more elements may be positioned between mold portions for use in an article. The method of claim 10, further including placing a second element into the mold.

In some instances, different particles may be provided to the different mold portions. In particular, in a first "crack", (i.e., an area between a first side of the element and a first mold portion) particles may be loaded that have a first set of characteristics such that a first cavity portion is filled and a second type of particles having a second set of characteristics may be loaded into a second "crack" (i.e., an area between a second side of the element and the second mold portion) to access a second cavity portion.

For example, according to a first aspect a method of forming an element from particle foam, in particular a method for forming a midsole. The method includes placing a plate into a mold between a first portion and a second portion of the mold, closing a securing component of the mold, the securing component forming a cavity, loading particles into the cavity on both a first side and a second side of the plate, moving the first portion and the second portion of the mold into a closed position, and fusing the particles.

Compression of the cavity increases contact surface area and particle to particle pressure, both of which are important for creating good fusion between the pellets, and quality and performance of the article.

Due to the particles being loaded into the cavity on both a first side and a second side of the plate, the particles may be compressed on both sides of the plate. This may ensure a desired volume of pellets are loaded and that a desired compression is reached on both a first side and a second side of the plate, and that the plate does not shift during compression.

According to some embodiments, the first portion of the mold and the second portion of the mold move independently of each other. In certain embodiments, the first portion of the mold and the second portion of the mold may also move independently of the securing component of the mold and/or the plate.

In some embodiments, the plate may have tabs located on an external portion and/or internal portion of the plate, and the tabs may have openings. Portions of the mold may have corresponding recesses and/or pins to engage the tabs.

In some embodiments, positioning components may be coupled to an element to position the element within portions of the mold in a predetermined location. The positioning component may engage the element and one or more of the securing component, a mold portion, or a pin. For example, pins within a mold portion may be used to engage a section of the positioning component such that the element is properly aligned during formation.

In further embodiments, the pellets loaded into a first portion of the cavity may have a first set of characteristics and the pellets loaded into a second portion of the cavity may have a second set of characteristics. In some embodiments, the first portion of the cavity may be on a first side of the plate and the second portion of the cavity may be on a second side of the plate.

According to some embodiments, primer may be added before moving the top portion and second portion of the mold into a closed position.

In some embodiments, a portion of the mold may be porous.

In some embodiments, a textile may be placed between a first portion and a second portion of the mold. The textile may be held in place in the mold using vacuum pressure applied to an opposite side of a mold. For example, when using a porous mold, a vacuum may be applied to the side of the mold portion opposite the molding cavity to hold a textile in place.

In certain embodiments, the surfaces of the particles may be fused using electromagnetic radiation. In an embodiment, the particles may be fused using heated steam.

In some embodiments, the plate may be placed at a point that is not equidistant from the first portion and the second portion of the mold. In further embodiments, a second plate may be placed in the mold. Further, in some embodiments additional elements may be placed in the mold.

In addition, according to some embodiments, a midsole may have a monolithic structure. A plate may be disposed in the monolithic structure. A mold line on the monolithic structure may separate areas of different materials. In some embodiments, a plate in the monolithic structure may be positioned such that a contour of the plate follows the mold line. The monolithic structure may be made of fused particles. The particles may be consistently fused on a first side of the monolithic structure and a second side of the monolithic structure. In some embodiments, the midsole may have a first property (e.g., first density) at a first portion of the monolithic structure and a second property (e.g., second density) at a second portion of the monolithic structure. In particular, the first portion of the monolithic structure may be on a first side of the plate and a second portion of the monolithic structure may be on a second side of the plate.

In some embodiments, the midsole may include a second element. For example, a midsole may include a plate and a textile. Alternately, embodiments of a midsole may include multiple elements. For example, a midsole may include two or more plates disposed at the mold line.

These and other embodiments are disclosed or are obvious from and encompassed by the following Detailed Description.

### BRIEF DESCRIPTION OF THE DRAWINGS

In the following detailed description, embodiments of the invention are described by way of non-limiting examples, are illustrated in the following figures:
FIG. 1 depicts a prior art process for steam molding an article made from particles.
FIG. 2 depicts a schematic of an expanded view of a mold portion during a prior art process for steam molding an article made from particles.
FIG. 3 depicts a bottom view of a prior art shoe.
FIG. 4A depicts a side view of a prior art shoe.
FIG. 4B depicts a schematic of a top view of an embodiment of an outsole.
FIG. 4C depicts a schematic of a top view of an embodiment of a midsole.
FIG. 5A depicts a schematic of a prior art configuration for forming an article from particles.
FIG. 5B depicts a schematic of a prior art configuration for forming an article from particles.
FIG. 6A depicts a schematic of a configuration for forming an article from particles in which an element is positioned within the foam particles.
FIG. 6B depicts a schematic of at configuration for forming an article from particles in which an element is positioned within the foam particles.
FIG. 7 is side view of a midsole having an element disposed in the midsole.
FIG. 8A depicts a side perspective view of an element.
FIG. 8B depicts a side perspective view of a midsole with an element embedded therein.
FIG. 9A depicts a schematic of a configuration for forming an article from particles in which an element is positioned within the foam particles.
FIG. 9B depicts a schematic of at configuration for forming an article from particles in which an element is positioned within the foam particles.
FIG. 10 depicts a flowchart outlining a method for forming a midsole having an element disposed therein.
FIG. 11 depicts a top perspective of a mold portion having pins in a predetermined configuration.
FIG. 12 depicts a top perspective of a mold portion having an element positioned on a ledge of the mold portion.
FIG. 13 depicts an enlarged view of a recess on a mold portion with a tab from an element positioned therein.
FIG. 14 depicts a side perspective view of an embodiment of a pin positioned in a mold portion.
FIG. 15 depicts a side perspective view of embodiments of pins positioned in a mold portion.
FIG. 16 depicts a side perspective view of an embodiment of a column positioned in a mold portion.
FIG. 17 depicts a side perspective view of an embodiment of a pin positioned in a mold portion.
FIG. 18 depicts a side perspective view of an embodiment of an element, specifically a plate.
FIG. 19 depicts a side perspective view of an embodiment of an element, specifically a plate.
FIG. 20 depicts a side perspective view of an embodiment of an element, specifically a plate.
FIG. 21 depicts a side perspective view of an embodiment of a plate positioned in a mold portion.
FIG. 22 depicts a side perspective view of an embodiment of an element.
FIG. 23 depicts a side perspective view of an embodiment of multiple elements positioned in a mold portion.
FIG. 24 depicts a side perspective view of an embodiment of multiple elements positioned in a mold portion.
FIG. 25 depicts a side perspective view of an embodiment of an element embedded in a foam article.
FIG. 26 depicts a top view of an embodiment of a plate engaging pins and recesses in a mold portion.
FIG. 27 depicts a top view of an embodiment of a securing component in a mold portion.
FIG. 28 depicts a top view of an embodiment of a securing component engaging an element in a mold portion.
FIG. 29 depicts an enlarged top view of an embodiment of a securing component engaging an element in a mold portion.
FIG. 30 depicts a top view of an embodiment of a porous mold cavity surface positioned in a mold portion.
FIG. 31 depicts a perspective view of an embodiment of a midsoles coupled to elements and positioned in mold portions.
FIG. 32 depicts a rear view of an embodiment of a midsole.
FIG. 33 depicts a side view of an embodiment of a shoe that includes a midsole as described herein.
FIG. 34 depicts a side view of an embodiment of a midsole that includes regions of particle foam having distinct properties and elements couple to each other.
FIG. 35 depicts a bottom view of an embodiment of a midsole that includes fused particle regions and elements placed between them.
FIG. 36 depicts a side view of an embodiment of a midsole with an element placed therein.
FIG. 37 depicts a perspective view of an embodiment of a midsole that includes elements embedded in the midsole.
FIG. 38 depicts a top view of an embodiment of a midsole that includes an element with tabs positioned in the midsole.
FIG. 39 depicts a side view of an embodiment of a positioning component that is positionable within a mold and removable from a finished article.
FIG. 40 depicts a side view of an embodiment of a positioning component that is positionable within a mold and removable from a finished article.
FIG. 41 depicts a perspective view of an embodiment of a positioning component that is positionable within a mold and removable from a finished article.
FIG. 42 depicts a perspective view of an embodiment of a positioning component that is positionable within a mold and removable from a finished article.
FIG. 43 depicts a cross-sectional view of an embodiment of a positioning component embedded in a finished article.
FIG. 44 depicts a top cross-sectional view of an embodiment of a positioning component embedded in a finished article.
FIG. 45 depicts an expanded perspective view of a portion of an embodiment of an article after removal of the removable tab from the article.
FIG. 46 depicts a perspective view of an embodiment of a removable tab embedded in a finished midsole.
FIG. 47 depicts a perspective view of an embodiment of a midsole that includes elements embedded in the midsole.
FIG. 48 depicts a side view of a portion of a midsole that include an element embedded in the midsole.
FIG. 49 depicts a cross-sectional view of an embodiment of a positioning component coupled to a portion of a mold and an element while positioned within a midsole.
FIG. 50 depicts a perspective view of an embodiment of a surface of a mold portion that includes multiple pins and a movable subpart.
FIG. 51 depicts a perspective view of an embodiment of a surface of a mold portion that includes a pin and a movable subpart.
FIG. 52 depicts a perspective view of an embodiment of a surface of a mold portion that includes a column and a subpart.
FIG. 53 depicts a schematic of an embodiment of a mold used in a double crack molding process.
FIG. 54 depicts a schematic of an embodiment of a mold used in a double-sided crack molding process.
FIG. 55 depicts a schematic of an embodiment of a mold portion used in a double crack and double-sided crack molding process.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements and/or processes, and may be used in conjunction with other existing or future technologies. This description should not be interpreted as implying any particular order or arrangement among or between various steps or elements except when the order of individual steps or arrangement of elements is explicitly described.

The description of the preferred embodiments is intended to be read in connection with the accompanying drawings, which are to be considered part of the entire written description of these disclosures. While the present disclosure is susceptible to various modifications and alternative forms, embodiments are shown by way of example in the drawings and will be described in detail herein. Patterns depicted in the drawings are representative and not to scale. The objectives and advantages of the claimed subject matter will become more apparent from the following detailed description of these embodiments in connection with the accompanying drawings.

In the following, embodiments and variations of the present invention are described in detail with reference to a midsole for a shoe, in particular a sports shoe. However, the present invention is not limited to these embodiments. For example, the present invention may also be used for safety shoes, casual shoes, trekking shoes, golf shoes, winter shoes, boots, skates, or other footwear known in the art. Further, the disclosure is not limited for use in shoes and can also be used in other applications, e.g., any articles of manufacture made in a compression mold.

"Crack" as used herein refers to an over-opening of the mold. Specifically, it refers to the distance between opposing mold portion surfaces in the "open" state for particle filling, and the "closed" state, when the particles are fused. The "closed" state is the size and shape of the final part, aside from small tolerances for material expansion.

"Crack height" as used herein refers to a distance that the surfaces of the mold portions may travel when moving from an open position to a closed position. For example, in some embodiments surfaces of mold portions move a surface of a first mold portion may move about 20 mm while a surface of the second mold portion may move about 10 mm. When the movement of the mold portions occurs in the same plane a crack height for the mold is 30 mm. In particular, crack height may be the distance over which particles may be compressed during molding.

"Double crack" as used herein refers to a process where there are two regions of the mold surface that have different crack heights. For example, in some instances this may include a fixed mold portion and a movable mold portion that has two regions that move independently of each other. In a particular embodiment, a double crack method may be used to create articles that have two areas of differing density.

"Multi-crack" as used herein refers to a process where there are multiple regions of the mold surfaces have subparts that have different crack heights. For example, in some instances this may include a fixed mold portion and a movable mold portion that has two regions defined by subparts that move independently of each other.

"Double-sided crack" as used herein refers to a molding process in which portions of the mold move independently of each other. For example, a mold may have a top mold portion and a bottom mold portion that move independently of each other and whose surfaces define a mold cavity. The mold cavity may be further defined by surfaces of a securing component that positions and/or secures a stiffening element within the mold cavity.

Formation of an article, in particular a midsole may require a number of choices as to materials and methods. In particular, the selection of materials including for example, selection of the particles used, including properties of the particles such as particle foam type, size, density, materials used in elements, the placement of elements within a mold, the loading configuration for the particles within portions of the mold, an amount of compression of portions of the mold, and an amount and/or distribution of heat supplied to the mold. In some embodiments, fusion of the particles may result from heat supplied by electromagnetic radiation and/or steam. These and other techniques will be explained in the following, and embodiments of midsoles will be described that were formed using these techniques.

Articles formed by fusion of particle foams may have continuous surfaces where the particles are fused to each other. In most embodiments, surfaces formed from fused foam particles may maintain the particle shape. Thus, the articles described herein, such as midsoles, while continuous may include surfaces having a varying surface texture.

Crack molds may be used to produce articles from particle foam. Generally, a crack mold may include two molding portions. In order to fill the mold with foam particles, the molding portions can be arranged such that the portions are spaced apart. In an open position, the mold portions are spaced apart by a predetermined distance. In a closed position, the mold portions are designed to press the foam particles together before welding.

As described herein, a total distance that molding surfaces of the mold portions travel from the open position to the closed position is defined as the crack height. Desired crack heights may be selected based on the geometry of the mold portions and/or the article to be formed as well as material properties such as shrinkage properties. Crack heights may be in a range from about 1 mm to about 100 mm. In some embodiments, it may be desirable for a crack to have a height of in a range from about 20 mm to about 70 mm. A particular example may include a crack height of about 30 mm to about 60 mm.

Crack heights for double-sided or multi-sided molding (i.e., the total crack height for the mold at particular corresponding positions along a surface of the mold portions) may be in a range from about 1 mm to about 100 mm. In particular, the crack height may be split between two mold portions. For example, a surface of a subpart of a first mold portion may move about 30 mm while a surface of the second portion may move about 40 mm during the fusion process and thus the mold has a total crack height for the double-sided process of about 70 mm. In some embodiments, a surface of a first mold portion may move about 20 mm while a portion of the second mold portion moves about 50 mm. Thus, the crack height for the mold in this embodiment is about 70 mm.

In a particular embodiment, a crack height on a single side of a double-sided or multi-sided molding process for any locations on the mold portions may be in a range from about 1 mm to about 40 mm. For example, a crack height of positions on a single side of a double-side molding process may be less than about 30 mm.

In some embodiments, when the mold portions are in a closed position there still may be a distance between the mold portions. For example, surfaces of the mold portion that define the mold cavity may be spaced apart. In addition, surfaces that are not part of the mold cavity may be spaced apart. As described herein both mold portions may move independently of each other. This may allow for different levels of compression if, for example, there is an element between the mold portions.

Further, crack heights may vary along a mold surface of the mold portions. In some embodiments, surfaces of the mold that define the mold cavity may have sections that have different geometries than the surrounding surfaces of the mold portions. For example, a mold surface of a mold portion for a midsole may have multiple sections. In particular, a midsole mold portion may have a rim section, a forefoot section, and a heel section. Each section may be positioned prior to the formation process at a predetermined start height specific for that section. Further, each section may move during the formation process at a different rate and/or over a different distance to a different predetermined end position.

Using crack molding to form foam articles may include injecting foam particles into a mold cavity formed between two mold portions. The mold portions may be positioned such that the mold portions are spaced apart from each other. This spaced apart configuration may aid in loading of the particles within the mold portions and/or around elements placed within the mold cavity. Once the mold portions are in position the cavity may be filled with particles. After filling the mold portions may be moved toward each other allowing the particles to become compressed. This compression may be controlled to allow for a pre-determined amount of compression. After compression steam may be distributed using vents in the mold to fuse the particles of foam to each other.

When elements, like support structures including rods, torsion bars, plates, cages, frames, and/or caps, textiles, films, foils, strands, filaments, external object engagers for objects that may be coupled to the article such that a portion of the object extends beyond an external surface of the article such as spikes (e.g., running spikes and/or decorative spikes), clips (e.g. bicycle clips), bindings, friction components, pads, springs, ports, decorative items such as charms, buckles, or the like, electronic components such as transmitters, electrodes, sensors such as optical sensors, pressure sensors, gyroscopes, accelerometers, or the like, displays, control panels, lights, LEDs, batteries, or the like, conductive elements such as wires, bands, sheets, or the like, shielding elements, for example, elements that protect another element or portion of the midsole from detrimental environmental conditions (e.g., heat, moisture, and/or pressure during the formation process), cushioning elements such as spring elements, pads, bladders or the like, tags such as near field communication tags, chips, or the like, and/or combinations thereof, are added to particle foam article the formation of the particle foam article becomes more complex. While these elements may improve the mechanical properties of the articles, positioning them within a portion of an article complicates delivery of particle foam, application of energy, and/or fusion of the particles. For example, adding elements such as a plate, rod, or textile may inhibit particle motion within a mold cavity and/or or cause uneven compression during molding. In addition, elements positioned within a mold may affect the application of energy during a fusion process. For example, elements may affect steam and/or heat distribution in portions of the mold.

Positioning an element such that it is molded into an article during the molding process may be desirable. By incorporating the element during formation of the article it may be possible to reduce and/or eliminate a number of materials required. For example, positioning elements in an article may reduce a number of steps and/or materials required for manufacturing and/or assembly. In particular, positioning of an element within particle foam articles during "in mold assembly" of the components may be more complex depending on the process used.

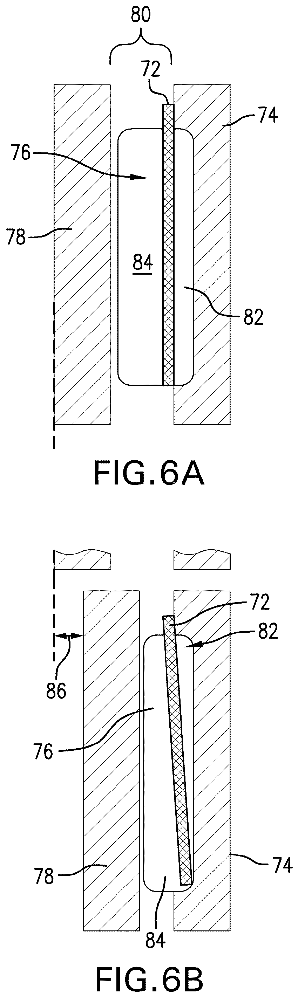

As shown in FIG. 6A, element 72 is positioned proximate stationary mold portion 74 within mold cavity 76 in an open position. In particular, as shown element 72 is a plate positioned proximate the fixed mold portion 74. In the example shown in FIG. 6A, the movable mold portion 78 is positioned a specific distance from the element 72 which defines a space 80.

As the expanded foam particles are added to the mold cavity, the element may inhibit particle motion and thereby creating an uneven distribution of the particles (not shown). For example, the element blocks at least in part particles from entering portion of the mold cavity 82. This may lead to overfilling of particle foam in some areas which may lead to an inconsistent compression and/or fusion. For example, mold cavity portion 84 is more open and accessible for filling with particles. Depending on the geometry of the element particles may be inhibited from passing through the element freely. If the particles are not distributed as intended sections of the mold cavity may experience an imbalance of forces. For example, the element may experience a differential in force that may cause the plate to bend and/or move.

In addition, during the loading process of the foam particles and/or movement of the mold portions may cause an element positioned in the mold cavity to move. Further, FIG. 6B illustrates a further issue with positioning elements in a mold. If an element shifts during the molding process this may cause overfilling of some of the particle foam in some areas which may lead to an inconsistent compression and/or fusion.

During the mold process as depicted in FIG. 6B, the element 72 shifts position. For example, when the cavity is filled with pellets and closed by movement of the mold portion 78, the element 72 shifts. The distance that movable mold portion 78 has moved during compression is represented by distance 86. For example, distance 86 may depict a range of motion of the movable mold portion. The shift in the position of the element may be potentially inhibit particle motion. As shown FIG. 6B depicts a molding process where the element 72 interferes with loading of the particle foam by moving within the mold cavity 76. For example, movement of element 72 changes a configuration of mold cavity portion 82 and mold cavity portion 84. Thus, there may be an uneven distribution of the foam particles in a portion of the article. This may result in uneven and inconsistent compression and/or fusion in the final article.

Specifically, when forming a particle foam midsole, a shift in position of the element during the molding process may alter the properties of the particle foam as well as the midsole. Movement of the element may be due to a force of the loading of the particle foam beads and/or the compression of the beads as the movable mold portion moves. A further issue is that an element that is not secured in some manner during loading, compression, application of energy, and/or fusion and may move at some point during or throughout the process.

In particular, a formation process where the element interferes with loading of the particle foam may result in an uneven distribution of the foam particles in a portion of the midsole and/or throughout the midsole. This may result in uneven and inconsistent compression and/or fusion in the final midsole.

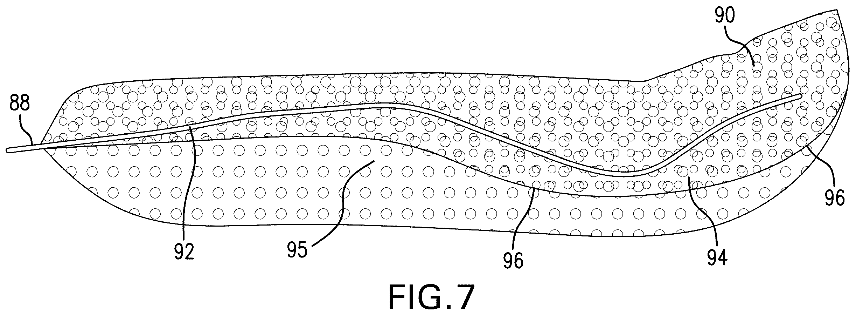

FIG. 7 depicts an example of a midsole formed using a single crack process that includes two mold portions, one of which is fixed and one movable portion. As depicted, element 88 has shifted during the formation of the midsole. This shift in position causes a displacement of element 88. This displacement changes the properties of the midsole. Further, as shown in FIG. 7 movement of the element 88 causes areas of uneven loading and/or compression that creates areas of uneven fusion in region 90. For example, as shown in FIG. 7, element 88 is a plate 92. As can be seen in FIG. 7, fusion characteristics differ in regions above 90 and below 95 the plate. Further, the plate 92 did not stay positioned proximate the mold line 96. Thus, a plate may create uneven compression in a foam midsole by reducing and/or inhibiting movement of the particles and/or movement of the plate. Movement of the plate may be caused by force of the particles entering the mold, movement of the mold portions, and/or compression forces. Region 90 depicts uneven fusion, while region 95 depicts a normal fusion. Foam particles in regions 90, 95 are shown in FIG. 7 as representative circles, the foam particles are not depicted to scale. Further, fused foam particles would be continuous and substantially maintain particle shape.

Fusion in an area of an article such as a midsole may be affected by elements positioned therein, movement of elements positioned therein, and/or particles during formation, an amount of steam, electromagnetic energy, heat, and/or pressure applied, and a time over which the steam, electromagnetic energy, heat, and/or pressure is applied.

A degree of fusion in an article may affect properties of the finished articles. For example, tear strength and/or energy return may each be an indication of a level of fusion within an article. Properties of the finished articles may be evaluated using standards. In particular, tear strength may be evaluated using a standard such as, for example, ASTM D3574 F or other test methods known in the art.

In some embodiments, if tear strength of the fused particle foam falls below a predetermined value it may indicate that at least some particles in the article are under-fused. For example, in a particular embodiment, a peel strength value may be assessed using a peel test which measures an average force needed to separate bonded materials per mm width. In particular, for an article described herein a peel test value of equal to or greater than about 3 N/mm width when measured using a peel test may be desired. In a specific embodiment, midsoles having peel strength values above 3 N/mm width may have sufficient fusion to meet the requirements necessary for a midsole. However, peel strength values for a particle foam article of less than 3 N/mm width may indicate that an article has at least an area in which fusion is not sufficient to achieve the desired properties of the article.

Further, a reduction in in energy return may indicate over-fusion between particles. Over-fusion of the particles may indicate that particles may have melted and fused in a manner that diminishes properties of the article formed. For example, over-fusion of the particles may result in a loss of particle integrity, energy return, and/or cushioning properties. Physical manifestations of over-fusion may include changes in particle properties, example, changes in color, hardness, and/or dimensions. In a particular example, changes in color, hardness, and/or dimensions of the particles as well as changes in energy return values in a midsole may indicate over-fusion in the particles in the midsole.

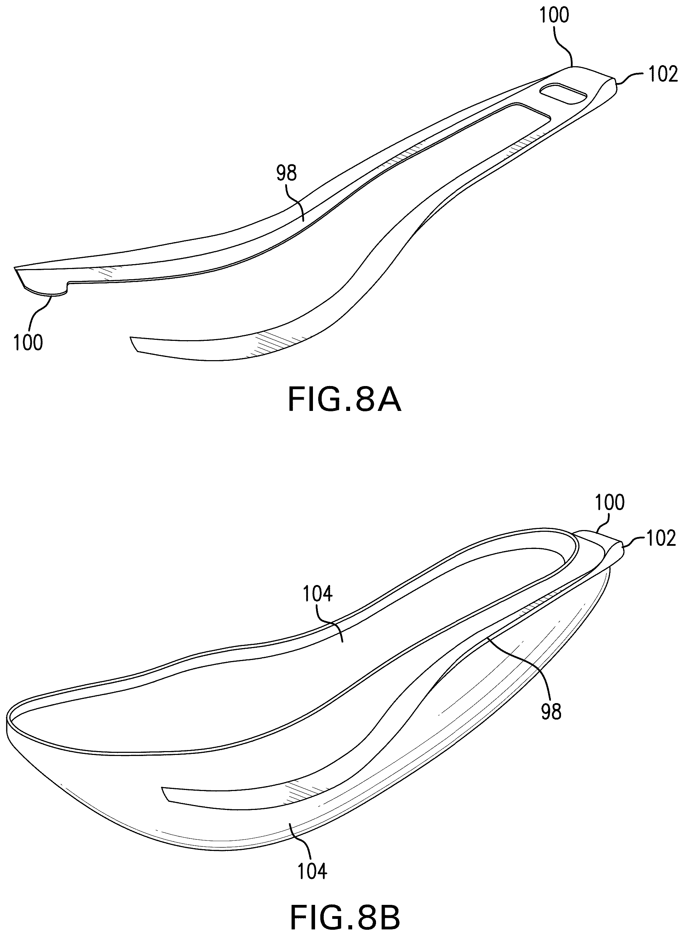

FIG. 8A depicts an element 98, in particular, a stability element for use in a midsole of a shoe. Element 98 includes tabs 100 and openings 102. Tabs and openings may be used during manufacturing to position and/or maintain the position of the element within the midsole. As shown in FIG. 8B a majority of the element 98 is embedded in the midsole material 104.

Tabs and/or openings in the element may be positioned such that they allow a securing component to position and/or maintain the position of the element prior to molding, during molding, and/or after molding is complete. Any visible portion of the tabs and/or openings may be removed after molding is complete.

To mitigate issues relating to loading of particles and/or movement of an element during molding a double or multiple crack process may be used. Crack heights may be in a range from about 1 mm to about 100 mm. In some embodiments, it may be desirable for a crack to have a height of in a range from about 10 mm to about 70 mm. A particular example may include a crack height of about 30 mm to about 40 mm split between two mold portions. Having multiple cracks within a mold may allow for increased customization by increasing a number of delivery points to introduce foam particles into a mold cavity during formation of an article, varying an amount of particles delivered, and/or changing conditions that the particles are subjected to (e.g., an amount of compression). By increasing a number of delivery points for the foam particles, a better distribution of foam particles may be achieved. For example, each crack may facilitate use of multiple inlets and/or feed lines to various positions such that specific materials may be delivered to zones in the mold cavity. Further, mold portions may include filling gates. Particles may be filled into the mold using conventional techniques known in the art, for example, pressure filling through a filling gate. Thus, it may be possible to introduce specific particles into predetermined zones of an article such that the article is tuned for a particular use. For example, particles that may result in a stiffer foam may be introduced into zones of a midsole that would require an enhanced stiffness, while zones of cushioning could be the result of introducing particles that are tuned to provide more cushioning.

A double-sided or multiple-sided crack method may involve use of multiple cracks formed between an element and/or movable mold portions. In some embodiments, a crack may be an opening between a portion of a mold and an element. Further, multiple mold portions and/or mold subparts may be used to form cracks during the molding process. Generally, a securing component along with mold portions, subparts, and/or elements define the mold cavity. Utilizing a crack on both sides of an element may be referred to as a "double-sided crack." In particular, using a crack on a first side of an element and a crack on a second side of an element may be referred to as a "double-sided crack" molding. A multi-sided crack method may involve the use of additional mold portions such as, for example, sliders. Sliders may in some embodiments come in a various angles.

Further, some embodiments may include additional mold portions that are specific to a particular design for an article such as a midsole. Additional mold portions and/or subparts may be held in place by a securing component such that multiple cracks are possible during a formation process.

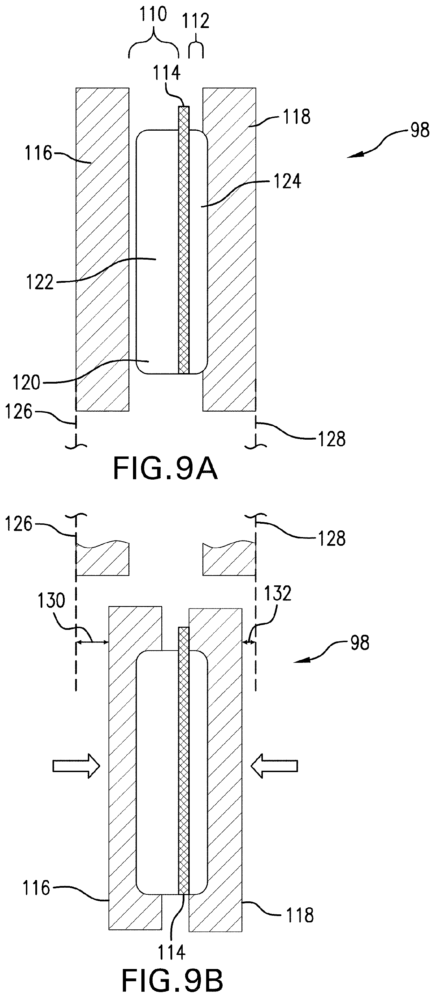

FIG. 9A depicts a schematic of an article formation process. Mold 98 is open. Gaps 110, 112 are formed between surfaces of element 114 positioned in the mold 98 and mold portions 116, 118. As shown, the mold portions 116, 118 are in an open position. The element 114 is secured using a securing component (not shown) in a premolding position spaced apart from the surfaces of the mold portions 116, 118 that in part define mold cavity 120. Mold cavity 120 may include mold cavity sections 122, 124. Lines 126, 128 indicate a starting position for mold portions in the open position.

Cracks may be used to load particles into the mold cavity at different positions. For example, foam particles may be loaded into the mold cavity at cracks. Further, loading of particles may occur at one or more locations in one or more cracks. In this manner, particles having predetermined properties may be used to create zones in the foamed particles and/or fused articles.

Some embodiments may include loading particles into mold cavities through mold portions. For example, particles may be delivered to mold cavities through one or more gates positioned in a mold portion. Further, gates may be positioned throughout mold portions such that different particles may be loaded in different parts of the molding cavities. In this manner, particles having predetermined properties may be used to create zones in the foamed particles and/or fused articles.

In an embodiment, particles may be loaded into mold cavities through cracks and/or through mold portions. For example, particles may be delivered to the mold cavity through one or more gates positioned in a mold portion as well as through the cracks. This may allow for a more consistent loading of particles around an element. Further, different particles may be loaded in differ parts of the cracks around an element to create zones in the foamed particles and/or fused articles.

During the molding process, mold portions 116, 118 move to compress the particles. FIG. 9B shows plate 114 in a mold 98 including a portion 116 and a portion 118 in a closed position. As shown, movement of the mold portions differs. The amount of movement may vary based on the molding conditions and/or desired properties of the final product. Lines 126, 128 indicate the starting positions of the open mold and distances 130, 132 show the differential between movement of mold portion 116 and mold portion 118, respectively.

After a foam article is formed visible portions of the element such as tabs and/or extraneous material may be trimmed if desired. In some embodiments where an element was a textile, foil, and/or film portions of the element that extend beyond the midsole may be used to wrap an area of the midsole, outsole, and/or the upper in a finished shoe.

When used to form a midsole, a double-sided crack technique described herein enables a midsole to have areas with different properties, while allowing the midsole to be manufactured in one single operation. Characteristics of interest may be based on desired functions and/or properties of an area of the midsole. For example, characteristics of interest may include cushioning, elasticity, energy return, weight, thickness, stiffness, and/or density. Various techniques are used in order to achieve such characteristics and/or functionality, which will be described in the following.

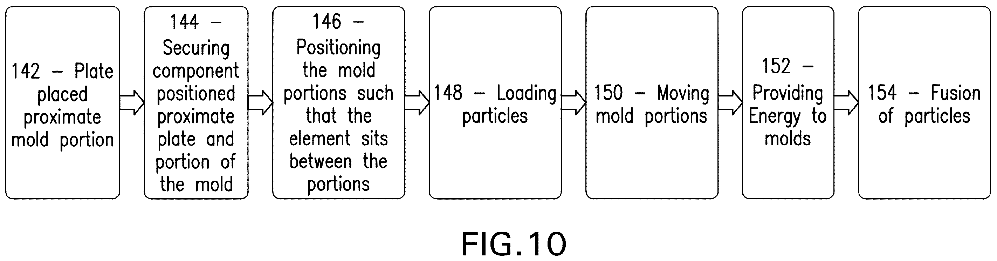

FIG. 10 depicts a flowchart illustrating a method 140 according to an aspect of the present disclosure. In this particular example, the method involves using a mold having multiple portions, positioning an element in a mold portion 142, positioning a securing component proximate the element in the mold 144, positioning the mold portions such that the element sits between a first and a second mold portion 146, loading expanded particle foam into the mold cavities on either side of the element 148, moving the mold portions such that the mold portions close after particle foam filling is complete 150, providing energy to the mold portions 152, and fusing the particles 154. In some embodiments, during the phase in which the particles are fused together, an element, such as a plate or stiffening element, may also be fused to the particles.

Closing the mold may involve moving the mold portions toward a final molding position. In particular, the mold portions may be moved such that they are positioned to provide the correct spacing for the final part.

In some embodiments, a midsole may be formed using the method described in FIG. 10. During formation of the midsole in this manner an outsole may be bonded to the particle foam as the foam is being fused. Specifically, parts of an outsole may be inserted in the mold. For example, an outsole foil and a plate may be inserted prior to fusion.

When an element is positioned in a mold cavity formed by mold portions it may be held in place using a securing component. In some instances, the securing component may hold an element in place during movement of the mold portions. A securing component may be positioned within a mold portion such that during compression and fusion the securing component defines at least part of the molding cavity.

Movement of the mold portions may be controlled throughout the molding process. For example, portions of a mold may move using a variety of known mechanical structures, including springs or actuators (such as geared, pneumatic, or electromagnetic actuators). Mold portions may be moved such that cracks (i.e., separations) between the element and mold portions are formed.

In an embodiment, after positioning of an element and the mold portions, particles of an expanded material, or "foam particles," are loaded into a first portion and a second portion of a mold. The particles loaded into the first portion may have the same characteristics as the particles loaded into the second portion of the mold, or the particles may have different characteristics based on the projected use of the product, requirements of the developer, and/or requirements and/or traits of the user of the product.

In some embodiments, the particles are loaded through an opening created when a bottom portion of the mold and an element positioned in the mold. In certain embodiments, a securing component may hold an element in place such that the particles may be loaded through openings between portions of the mold. The securing component may define in part the molding cavity, in particular side walls of a molding cavity that will correspond to side walls of a finished article such as a midsole.

Mold portions and/or subparts may be positioned on different sides of elements such that gaps exist between the mold portions and the elements. For example, a double crack may refer to a situation where one crack may be on a first side of an element such as a plate while a second crack may be on a second side of an element such as a plate. In some embodiments, where two or more elements are used in an article there may be three or more cracks into which particles are delivered to a mold cavity.

Addition of particles into a mold cavity may occur through two or more inlets, gates, and/or feed lines. For example, a first feed line may deliver particles to a first crack and a second feed line may deliver particles to a second crack. In some embodiments, multiple feed lines and/or gates may be used to deliver particles to predetermined areas of the mold cavity. In particular, in embodiments using multiple elements and/or elements having a complicated geometry, the use of multiple feed lines, gates, and/or inlets may allow for the delivery of particles in a more effective manner to a mold cavity. Additionally or alternatively, the loading of the mold with the particles may proceed via a feed line that communicates with the cavity of the mold using an opening, a filling gate, an inlet, or combinations thereof. In some embodiments, the loading proceeds by a plurality of feed lines, gates, and/or inlets. For example, particles may be filled into the mold using pressure filling through multiple filling gates.

In a particular embodiment, a mold portion may include a forefoot and rearfoot having different crack heights. In such an instance, gates may be positioned in a mold portion in both forefoot and rearfoot regions.

Some embodiments that utilize a double-sided crack process scenario may include gates positioned on two or more mold portions. Between the two or more mold portions an element, such as a stiffening element may be positioned. For example, a top midsole mold portion and a bottom midsole mold portion may each move toward a closed position. In the closed position, a stiffening element may be positioned between the mold portions. In such an embodiment, the filling gates may be positioned on both of the top and bottom mold portions.

Primers may be added to the mold portions, elements, and/or particles to enhance bonding properties of the foam particles. The addition of primers may occur directly into the mold portions in some embodiments. Alternately, primers may be added to the particles and introduced into one or more mold portions during delivery of the particles. In some instances, the introduction of the primers may be controlled such that the primer is introduced into specific zones of the mold such that a resulting article has regions of predetermined properties of interest.

A gap between the portions of a mold when in the open position may influence the available loading volume of the mold. The available loading volume may, in turn, influence the amount of material that is loaded and therefore molded and/or fused into an article or a portion thereof. For example, the available loading volume may influence properties of a cushioning element, and hence the mechanical properties of the cushioning element. For example, a loading volume may affect a density, stiffness and/or elasticity of a midsole or portions thereof.

A larger distance between a first mold portion and a second mold portion in the double-crack-gap position, i.e. a larger crack height, will allow more particles to be filled into the mold, which are therefore more strongly compressed when the mold is closed, compared to a smaller crack height, assuming, for example, that the available loading volume is completely used and the closed position of the mold is the same irrespective of the crack height. However, in some instances the filling height and/or details of the closed position of the mold may also influence the compression.

In a particular example of an embodiment, a first portion of a mold and a bottom portion of a mold may move towards each other, from an open position to a closed position, thereby compressing the particles into a desired final shape. In some embodiments, a first portion of the mold and a bottom portion of the mold may move independently of each other. For example, a portions of the mold may be moved different distances to account for desired properties of areas of the article to be formed.

In certain embodiments, parts of a first portion of the mold and a bottom portion of the mold may move independently of a securing component of the mold.

Further, parts of a first portion of the mold and a bottom portion of the mold may move independently of an element such as a plate positioned between the mold portions. Movement of parts of a first portion of the mold and a bottom portion of the mold may differ. For example, a first portion and a bottom portion may move different distances between an open position and a closed position.

Further, in some embodiments during molding movement of the first portion or bottom portion may be controlled such that movement of one portion is faster than the other. In some embodiments, the first portion of the mold and bottom portion of the mold may move to compress the particles and may create a balanced pressure on a top side of the plate and on a bottom side of the plate. In some embodiments, a first portion and a bottom portion of the mold may move different distances to create different pressures on a first side and a second side of a plate. A first portion and a bottom portion of the mold may move towards each other using a variety of known mechanical structures, including springs or actuators (such as geared, pneumatic, or electromagnetic actuators).

In some embodiments, a first mold portion and a second mold portion may include several individual subparts and the crack height between a subpart on first portion and a corresponding subpart on a second portion may be controlled individually. In this manner, crack heights for subparts may vary. In some embodiments, only one of the mold portions includes such individual subparts, while the other mold portion does not, which may allow for a simpler mold construction. With at least one mold portion (e.g., a top or a bottom portion) including individually controllable subparts, the crack height and hence the loading of the mold and compression of a first particle material may be locally controlled. Thus, the first particle material and, in particular, the particles may be compressed with differing forces in different areas of the mold. Thus, in some embodiments, different densities may be obtained in different zones of the finished article. In certain embodiments, variations in density due to different thicknesses in the molding cavity may be levelled out or compensated for.

If, for example, midsoles for footwear are produced in the mold, then the resulting particle foam component is generally much thinner in a front section than in a rear section. In cross-section, such a sole has a roughly wedge-shaped form. One or more mold portions, for example, may be pivoted around a swivel axis to create the crack-gap position, said axis being arranged transversely to the longitudinal axis of the mold at a thinner end of the mold (in other words arranged eccentrically) then on swiveling back into the closed position of the mold to obtain a roughly constant density of the foam particles contained therein. This option may, therefore, be beneficially applied for the manufacture of products which are wedge-shaped in cross-section. For example, during closing of the mold, a mold portion or mold portions may, for example, be pivoted around an eccentrically arranged swivel axis.

Moreover, individually controllable subparts of mold portions, or an eccentrically arranged swivel axis or axes, may also be used to compress areas of the molding cavity with different thickness as evenly as possible, in order to obtain the most even heating and quality of fusion in the whole particle foam component. It may, however, also be expedient, if certain areas are to be heated more strongly using electromagnetic radiation. In some instances, electromagnetic radiation may be used to ensure proper fusion of the particles. In some embodiments it may be desirable that during production of the particle foam components a predetermined, non-constant temperature profile is set.

Particles may be fused by supplying energy to the mold. In certain embodiments, more energy is supplied to the particles in a first portion of the mold than in a second portion of the mold.

In some embodiments, energy may be supplied using steam and/or heat. For example, when steam is used portions of the mold may include one or more vents to allow steam to pass through. In some embodiments, a porous structure may be used, which may allow steam to flow through the porous structure and may allow for more uniform heating than vents. Steam may be controlled such that a portion of the surface of the particles is melted allowing the particles to bond to each other. An amount of steam and/or locations of steam entry may be controlled to allow the particles bond to each other while remaining intact. For example, the particles may bond such that a granular but closed plastic foam structure is formed.

In some instances, the properties of the particle foam article may be influenced by parameters of the added steam. In particular, a temperature of the added steam may influence the strength of the melting of the particle surfaces. Higher steam temperatures may create stronger bonding of the particles. In addition, a strength of the bonding may be controlled via the duration of the steaming process.

In certain embodiments, an amount and duration of a providing steam may vary. For simple articles using only a few different materials and/or elements, a steaming time may be relatively short. More elaborate constructions of articles that involve a plurality of materials and/or elements may require a longer steaming time and/or more a larger amount of steam.

In some embodiments, the mold portions may be pressurized during a portion of the method. A higher initial pressure, which is used for compressing the particles may lead to a larger density of the expanded particles. The densities of the expanded particles may vary from about 0.030 to about 0.3 grams/cm³. In some embodiments, a density of the expanded particles in a finished article may be in range from about 0.070 to about 0.250 grams/cm³.

After formation of the article, cooling the particles slowly may stabilize the structure of the article. This may allow the article to have a higher long-term stability. In some embodiments, after an article is formed it may be cured. When curing an article, a curing temperature and a curing duration may be selected to achieve a specific property in the finished article such as a desired stabilization of the structure.

In certain embodiments, energy may be supplied using electromagnetic radiation, and in some embodiments, is supplied in a form of electomagnetic radiation in a range from about 10 MHz to about 300 GHz. Specifically, electromagnetic radiation in a range from about 20 MHz to about 450 MHz may be used. For example, electromagnetic radiation may be provided in a range from about 20 MHz to about 50 MHz to fuse foam particles in a midsole. Alternately, electromagnetic radiation in a range from about 400 MHz to about 450 MHz.

In an embodiment, a portion of the mold may, for example, be made of an epoxy resin, PTFE, PE, PEEK, or other materials which are structurally stable during electromagnetic field application. The surface material of the mold may be selected so that it has a similar loss factor to that of the foam particles, which can lead to a substantially uniform heating of both the particles and the walls of the mold enclosing a molding cavity, so that a better surface fusion of the component may be obtained. The surface of the mold may, for example, be altered by a coating process or by applying a suitable surface material in another way known in the art.

Molding utilizing a double crack gap allows for enhanced control of the conditions during molding thereby providing a way to tune properties of the molded element. For example, using a double-crack-gap may allow a designer and/or developer of an element to tune one or more regions of a particle foam component to have specific predetermined properties. In some instances, a particle foam component may be designed for a particular use case. For example, a particle foam component for a running shoe would have different preferred properties than a particle foam component for a shoe for lateral sports.

In particular, a method that uses a double crack gap may be used to control a density of a region of a particle foam component. Using a double-crack-gap may facilitate increasing the density in a particular region of a particle foam component to be manufactured. For example, in such a region the mold may be opened to a larger amount and thus "overfilled" with particles. During compression, this overfilled region may require additional force to compress the particles upon closing of the mold. Thus, in the finished particle foam component this region may have an increased density.

In some embodiments, particles of expanded material of a midsole are subjected to a combination of heating, pressurization, and/or steaming processes after filling the mold. After subjecting the particles to this combination of heating, pressurization, and/or steaming processes the surfaces of the particles may be melted at least partially, so that the particle surfaces bond together after cooling. In some instances, the combination of heating, pressurization, and/or steaming may cause the formation of a chemical bond between the particles. Formation of a chemical bond in this manner may reduce the need for bonding substances, for example, adhesives.

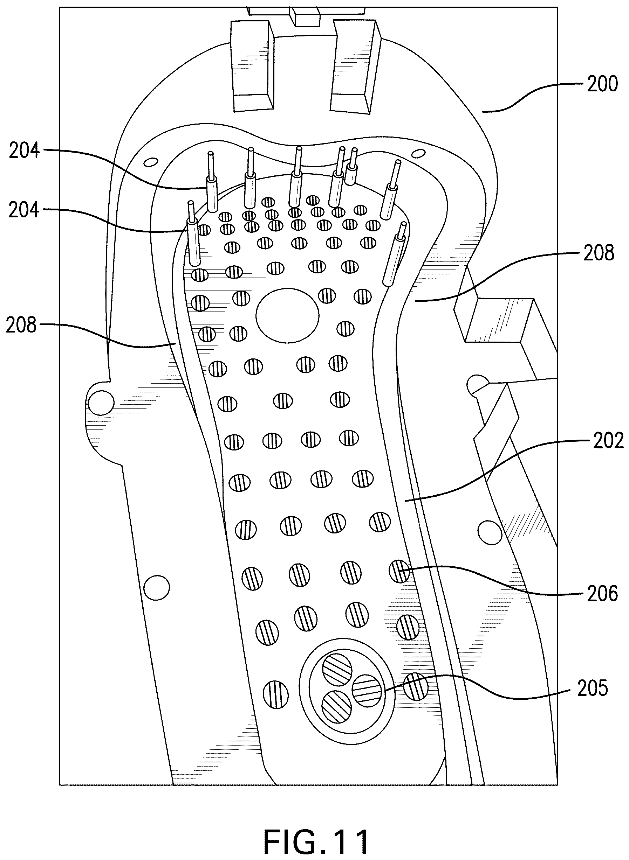

Mold portions may include engaging members that engage elements positioned in the mold. In particular, engaging members may include various geometries such as protrusions, ledges, overhangs, hooks, columns, pins, recesses, etc. Members on the mold portions may be configured to engage elements inserted into the mold. A configuration of members may be designed to engage a specific element and/or a portion thereof. Some mold portions may include multiple types of members to engage an element. FIG. 11 shows a portion 200 of a mold for a shoe midsole. Mold portion 200 includes a positioning cut-out 202, engaging components 204, filling gate 205, and vents 206. Ledge 208 in mold portion 200 is used to engage an element and/or a securing component (not shown). In some embodiments, a mold portion may include positioning cut-outs that engage with elements in order to properly position the element within the mold portion prior to securing the element with a securing component.

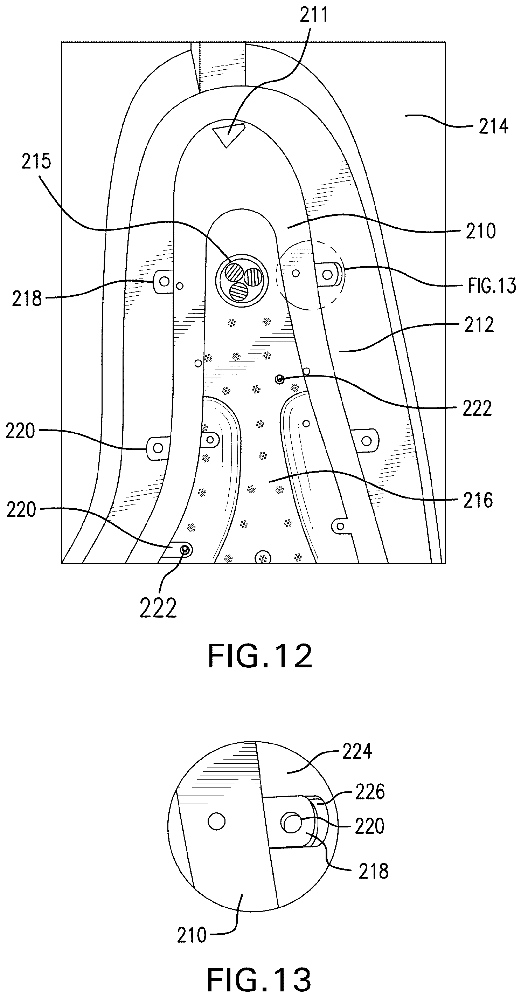

As shown in FIG. 12, element 210 is positioned in part on ledge 212 in mold portion 214. Element 210 includes opening 211. During the compression process, the ledge of the mold portion and the element positioned thereon may maintain their positions while other sections of the mold portion move. In particular, mold surface 216 moves during compression of the mold. For example, the ledge and element may maintain a position within a mold surface moves to compress material within the mold portion. As shown in FIG. 12, tabs 218 and openings 220 engage engaging components 222 to position the element 210. Filling gate 215 in mold portion 214 is used to deliver particles to the mold. Filling gates may include a design on a surface that is imparted to the fused particles during formation of the article. For example, in some embodiments gates may include a reverse image of a logo or design that will be imprinted on a portion of article such as a midsole during fusion of the particles.

FIG. 13 depicts an expanded view of a tab 218 with openings 220 of element 210. Ledge 224 of mold portion 214 includes cut-out 226 that corresponds to tab 218.

Engaging components may be formed such that they engage a portion of an element. For example, engaging components may include pins positioned throughout the mold portion. A configuration of pins may vary based on the geometry of the element to be positioned in a midsole. A diameter, shape, profile, and/or height of a pin may vary depending on location in the mold and/or a type and/or configuration of the element. Further, in some instances a diameter, shape, and/or profile of a pin may vary along the length of the pin. In some embodiments, a cross-section of a pin may be any shape including but not limited to regular and/or irregular shapes. For example, a cross-section of a pin may include a circular shape, an oval shape, a star shape, a rectangular shape, etc.

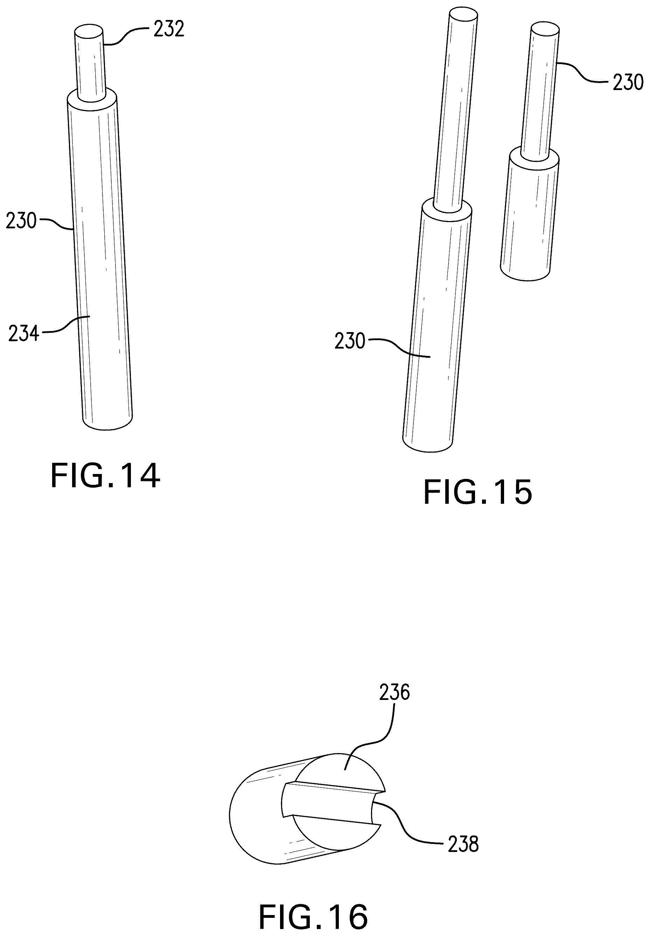

Further, pins may have diameter that varies along a length of pin. For example, a pin may have a larger diameter closer to a mold surface of the mold portion. FIGs. 14-16 depict pins 230 for use in mold portions. In particular, FIG. 14 depicts pin 230 having a smaller diameter section 232 at a top portion of a pin and a large diameter section 234 at the bottom portion of the pin.

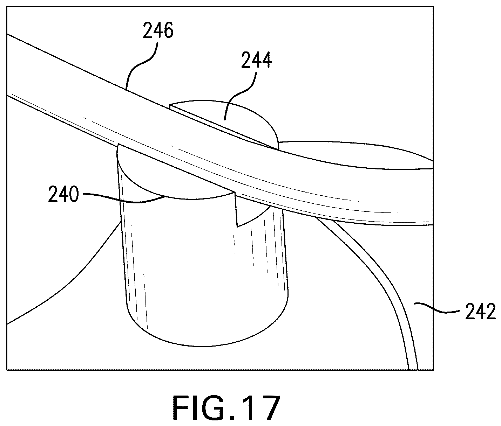

In addition, FIGs. 14-15 depict pins 230 having differing lengths of small diameter section 232 and large diameter section 234. The length of these sections is dependent on the configuration of the element that is to be positioned within the article. This may help position an element, such as a plate. Configurations of individual pins may vary based on a configuration of the element that is to be inserted in the article. For example, as shown in FIGs. 14-16, lengths of the pins may vary as well as the lengths of sections of the pins. Further, as shown in FIG. 16 a pin 236 includes a slot 238 to engage a portion of an element. FIG. 17 depicts pin 240 positioned in mold portion 242 having a slot 244 that engages a portion of element 246. Further embodiments may include engaging components such as pins that include openings, slots, ridges, or the like to engage elements.

Elements to be included in an article such as a midsole may have properties that are desired for a specific use and/or user. For example, elements may be designed to have a set of unique characteristics. Elements may have a set of characteristics that are optimal for a specific application, including, but not limited to, running on a track, trail running, jumping, throwing, lifting, wrestling, fencing, playing a lateral sport such as tennis, table tennis, basketball, pickleball, football (i.e., soccer), rugby, baseball, or American football, skiing, snowboarding, cycling, or the like. Further, elements may have a set of characteristics that are optimal for a user and may be based on factors including, but not limited to, a user's weight, height, anatomy, and/or stride. Alternately, a developer and/or designer of a shoe may have a predetermined set of characteristics of interest for a particular shoe or use.

Characteristics of interest for an element may vary depending on the element but may include, but are not limited to density, material, thickness, deformation, reflective capabilities, tensile strength, heat insulating properties, luminescence, stability, cushioning, conductivity, wicking capabilities, elasticity, temperature resistance, rigidity, energy return, bonding properties, abrasion resistance, cost, weight, melt temperature, tear resistance, and/or others know in the art.

For example, in some embodiments, an element may have a predetermined rigidity. In particular instance, a material used in an element may have a tensile stiffness modulus in a range from about 1 GPa to about 15 GPa. In some embodiments, a material used in an element may be reinforced with fiber. For example, an element may include a long carbon fiber composite as a reinforcement. In a particular embodiment, a portion of an element may have a tensile stiffness modulus in a range from about 1 GPa to about 15 GPa.

In a further embodiment, a profile or cross-section of an element may affect a rigidity of an article. For example, a midsole may have an element having a predetermined profile and/or cross-section such that it imparts predetermined properties to the midsole.

Properties of an element such as material, profile, thickness, geometry, layup, etc. may determine at least in part the configuration of positioning members (e.g., projections, tabs and/or openings) on an element. Positioning members may be formed integrally with the element.

In some embodiments, positioning members may be designed to removably engage portions of an element during formation. For example, positioning members may be placed on an element prior to and/or during positioning of the element within a mold such that they remain in place during formation of the article. After formation of the article is complete the positioning members may be materials may be removed from the article.

Elements positioned within an article may include one or more of support structures including rods, torsion bars, plates, cages, frames, and/or caps, textiles, films, foils, strands, filaments, external object engagers for objects that may be coupled to the article such that a portion of the object extends beyond an external surface of the article such as spikes (e.g., running spikes and/or decorative spikes), clips (e.g. bicycle clips), bindings, friction components, pads, springs, ports, decorative items such as charms, buckles, or the like, electronic components such as transmitters, electrodes, sensors such as optical sensors, pressure sensors, gyroscopes, accelerometers, or the like, displays, control panels, lights, LEDs, batteries, or the like, conductive elements such as wires, bands, sheets, or the like, shielding elements, for example, elements that protect another element or portion of the midsole from detrimental environmental conditions (e.g., heat, moisture, and/or pressure during the formation process), cushioning elements such as spring elements, pads, bladders or the like, tags such as near field communication tags, chips, or the like, and/or combinations thereof.

For example, a particle foam article formed using the method described herein and for use on an article of clothing may include a support structure as well as an external object engager. An external object engager may be embedded in the molded particle foam. In some instances, at least a portion of the external object engager may communicate with an external surface of the particle foam article such that an object may be coupled to the external object engager.

In particular example, a midsole may include an external object engager having threading to which an external object may be coupled. In the midsole, an external object engager may have an annular opening that communicates with the external surface of the foamed article such that threads of a track spike may engage threads on a portion of the annular opening of the external object engager.

Elements for use in articles may be made from materials that possess the desired characteristics including but not limited to metals, fibers such as carbon fiber, glass fiber, and natural fibers, composites, ceramics, textiles, strands, plastics including thermosets, thermoplastics, such as polypropylene, polyethylene, polycarbonate, thermoplastic polyurethane (TPU) or combinations thereof. Materials used in elements may be selected for desired characteristics, such as rigidity, color, transparency, bonding properties, heat resistance, water resistance, strength, sensitivity to electromagnetic radiation, sensitivity to pressure, abrasion resistance, cost, weight and/or energy return. It should be noted that elements may take a variety of forms and are not limited to any shape depicted in the embodiments herein.

Midsoles may be designed such that expanded materials at least partially surround one or more elements of the midsole. For example, an element may extend at least partially through the expanded material of the midsole. In such an instance, the element and the expanded material may be coupled without the need for a bond. Utilizing such a design may increase design freedom for a midsole. Thus, it may be possible to precisely influence the properties of a midsole.

In some instances, the element may also form bonds with the material of the midsole, for example, with the expanded material of the midsole. This bond may further increase the stability of the sole. Bonds between the midsole and element may include an adhesive bond, a fusion bond, and/or a bond achieved by the addition of an additive. In particular, additives of interest may include, but are not limited to thermoplastic powders, thermoset powders, and/or primers such as a cement primer may increase a strength of a bond between an element and particle foam material. For example, certain embodiments may include the addition a urethane in powder form, which may enhance the bond formed between the element and the material, in particular the expanded material, of the midsole.

Embodiments may include a coated and/or prelaminated element for use in a particle foam article. For example, an element may be at least partially coated with a film layer or foil to increase adhesion of portions of the element to the particles when fused.

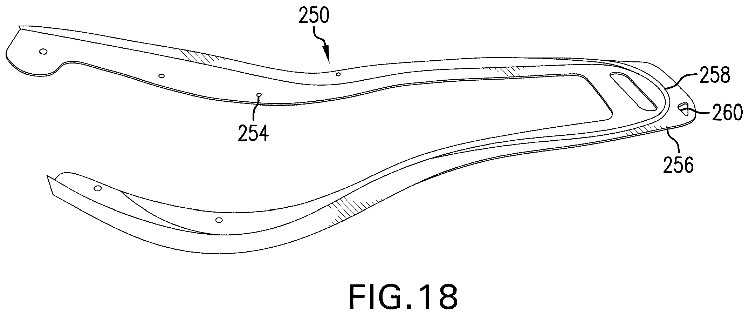

Various embodiments of elements that may be positioned within a midsole are illustrated by FIGs. 18-22. Elements may include, but not limited to metals, fibers such as carbon fiber, glass fiber, and natural fibers, composites, textiles, plastics including thermosets, thermoplastics, such as polypropylene, polyethylene, polycarbonate, thermoplastic polyurethane (TPU) or any other suitable materials to provide desired properties to an article. For example, it may be desirable that an element provides a predetermined stiffness to a portion of a midsole. Alternatively, materials and/or constructions of an element may be selected such that the element provides a predetermined energy return to a midsole.

As shown in FIG. 18, element 250 is a plate having internal tabs 252 with openings 254. Further, in heel region 256 the plated includes an external tab 258 with openings 260.

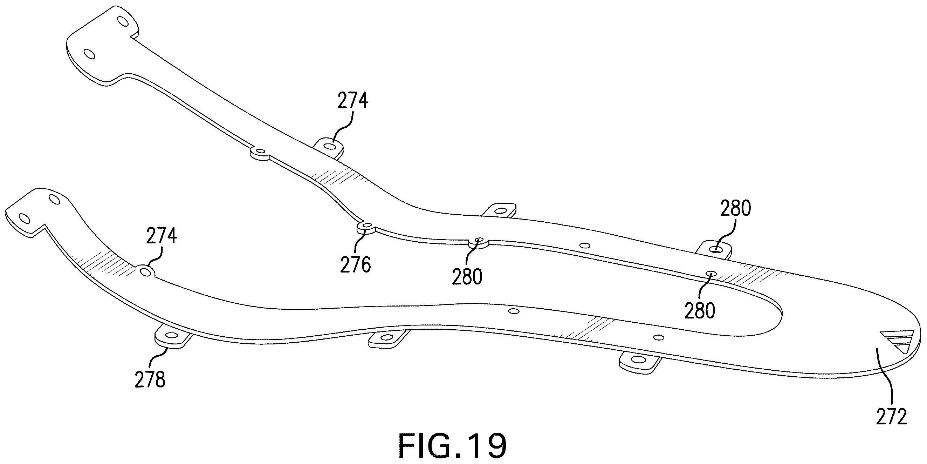

FIG. 19 illustrates an embodiment of an element 270 for use in a midsole, specifically, plate 272. Plates may be designed to have a set of unique characteristics as determined by the developer. In particular, a plate may be used to stiffen a midsole. For example, plates may have constructions and/or materials that are designed to provide a specified rigidity. As shown in FIG. 19, plate 272 is a single piece. In some embodiments, plates may include two or more pieces.

As shown in FIG. 19, plate 272 includes engaging structures 274 such as internal tabs 276, disposed on an interior portion of plate 272 and external tabs 278 disposed on an exterior portion of plate 272. External tabs 278 and internal tabs 276 are projections extending from plate 272. Engaging structures may have a variety of geometries and/or openings to allow the plate to engage with a portion of a mold, another element such as another plate or rod, or a securing component. As shown in FIG. 19, external tabs 278 and/or internal tabs 276 include holes 280 projecting through them. In addition, plate 272 includes hole 280 that projects through on a body of plate 272. Plates may be made out of metal, composite material, carbon fibers, plastics, or combinations thereof to provide desired properties, such as rigidity and rebound. It should be noted that a plate may have a form designed for a specific use and/or user and is not limited to the shape depicted in the embodiments depicted herein.

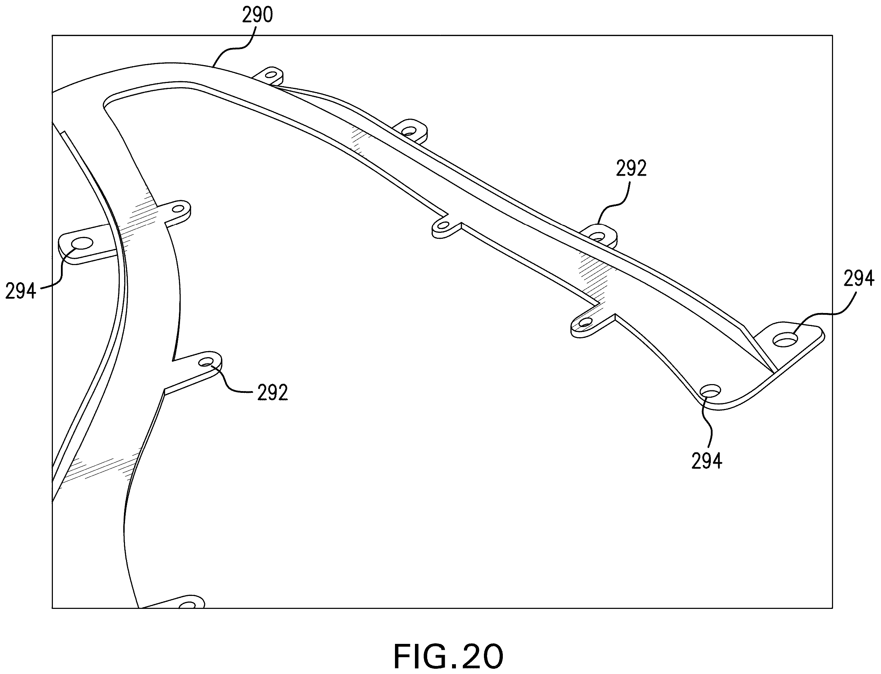

An element, specifically, a plate 290 is shown in FIG. 20. Plate 290 has a plurality of tabs 292 and openings 294. The configuration of tabs and/or openings may be specific to a particular element, for example, a plate. Properties of an element such as material, profile, thickness, geometry, stiffness, size, surface area, and/or a predetermined position within an article may determine at least in part the configuration of tabs and/or openings on an element.

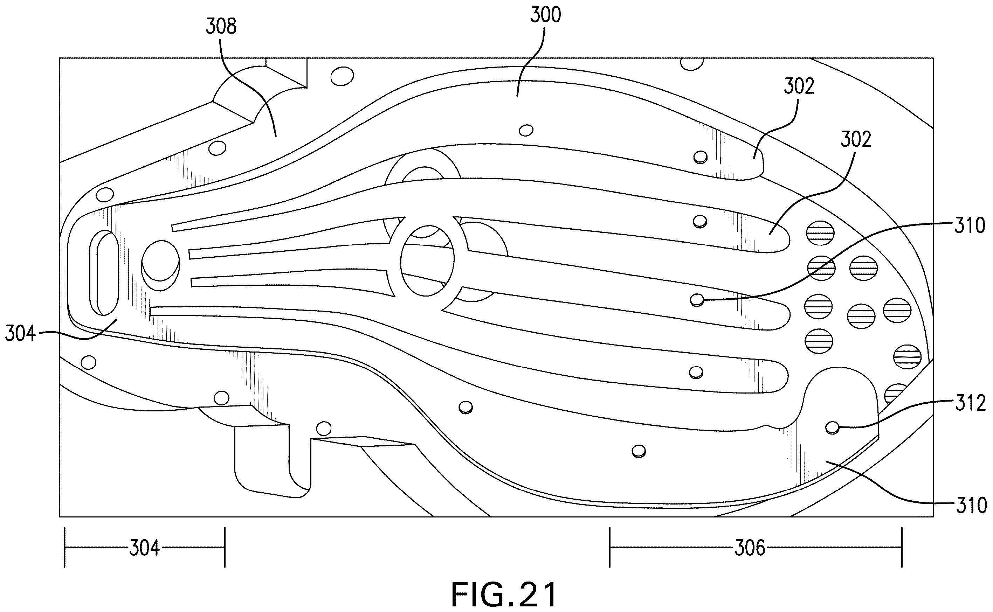

Plate constructions may vary depending on desired properties of a midsole. FIG. 21 is a bottom view of an example of a plate 300 that includes structural fingers 302 extending from heel portion 304 to a forefoot portion 306. As shown the plate 300 is positioned in a mold portion 308. Pins 310 of the mold portion 308 engage openings 312 in the plate 300.

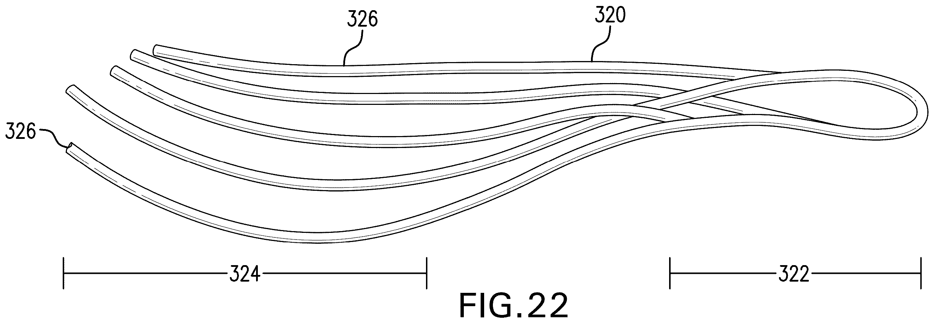

A further construction for an element 320 for a midsole is shown in FIG. 22 that extends from the heel portion 322 to the forefoot 324. Here the fingers 326 have a different shape and profile due to both the use of the shoe this piece was designed for, as well as, the materials used.

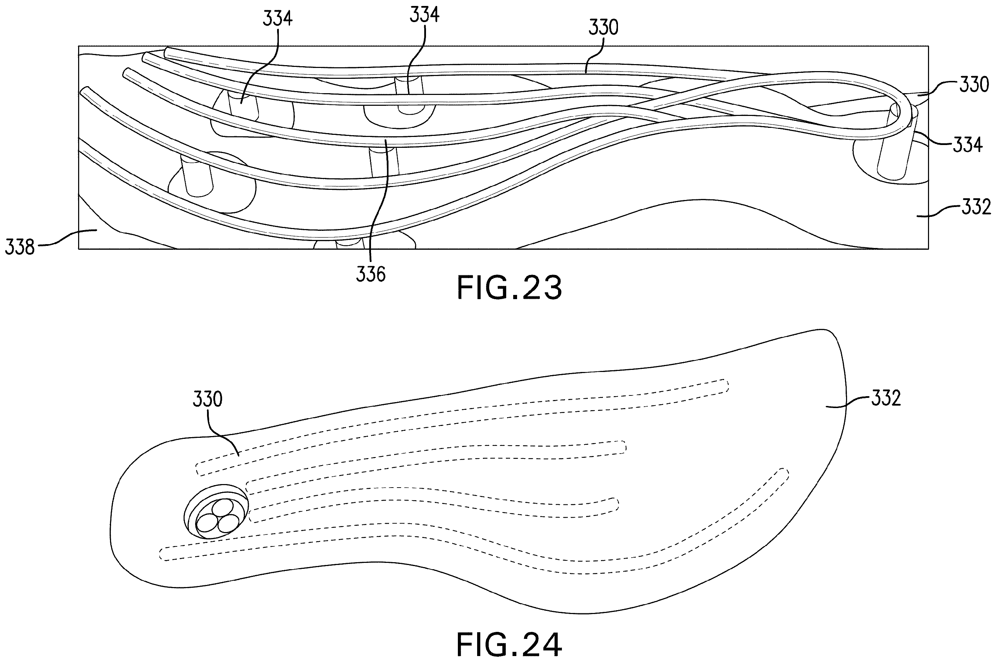

Most of the examples above depict single elements used in articles such as midsoles. Some embodiments may include multiple elements combined to impart specific properties to an article. In FIGs. 23-24, elements, specifically a plate 330 and a textile 332 are combined to form an element for use in a midsole. In this configuration, pins 334 have slots 336 to engage the plate 330. For example, the pins 334 extending from mold portion 338 include slots 336 to engage portions of the plate. FIG. 24 depicts a view of the plate 330 and textile 332 from the opposite side that is depicted in FIG. 23.

Other combinations not shown in the figures are also possible including, for example, combining plates, rods, cables, springs, tubes, and/or sheet elements such as textiles, films, or foils. Portions of the various elements may extend beyond the article in some embodiments. For example, it may be desirable in some embodiments to use a textile that extends beyond a midsole during molding. This configuration may allow the textile to be used to wrap a portion of the midsole, upper, and/or outsole.

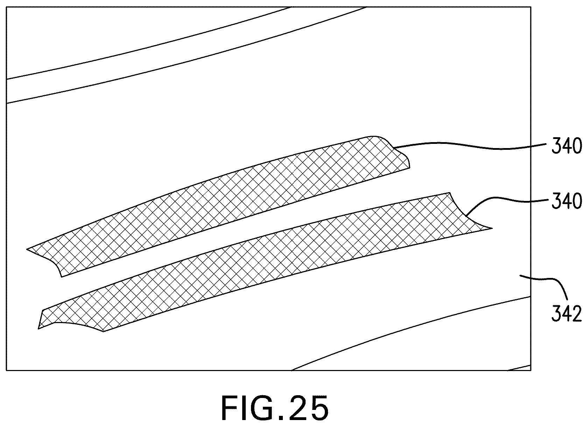

In some embodiments, a portion of the element 340 embedded in the particle foam article 342 is exposed as shown in FIG. 25.

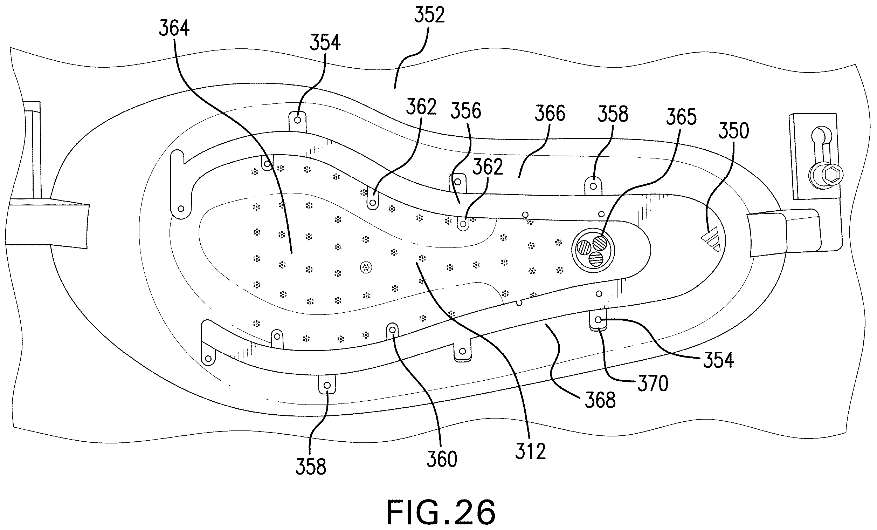

As shown in FIG. 26, plate 350 is placed in a portion of the mold 352 such that at least some of the openings 354 engage pins 356. Tabs 358 extend outside of the mold cavity. Some tabs 360 extend into the mold cavity. As shown in FIG. 26 some tabs 362 that extend into the mold cavity engage pins 356.

As seen in FIG. 26, mold portion 352 has a surface 364 that includes filling gate 365 and a positioning sector 366. Plate 350 may be positioned within mold portion 352 such that a section of plate 350 rests on a positioning sector 366. As shown in FIG. 26, external tabs 358 of plate 350 rest on positioning sector 366. As shown in FIG. 26 the positioning sector 366 includes a ledge 368 and recesses 370 such that plate 350 is seated properly in the mold portion 352.

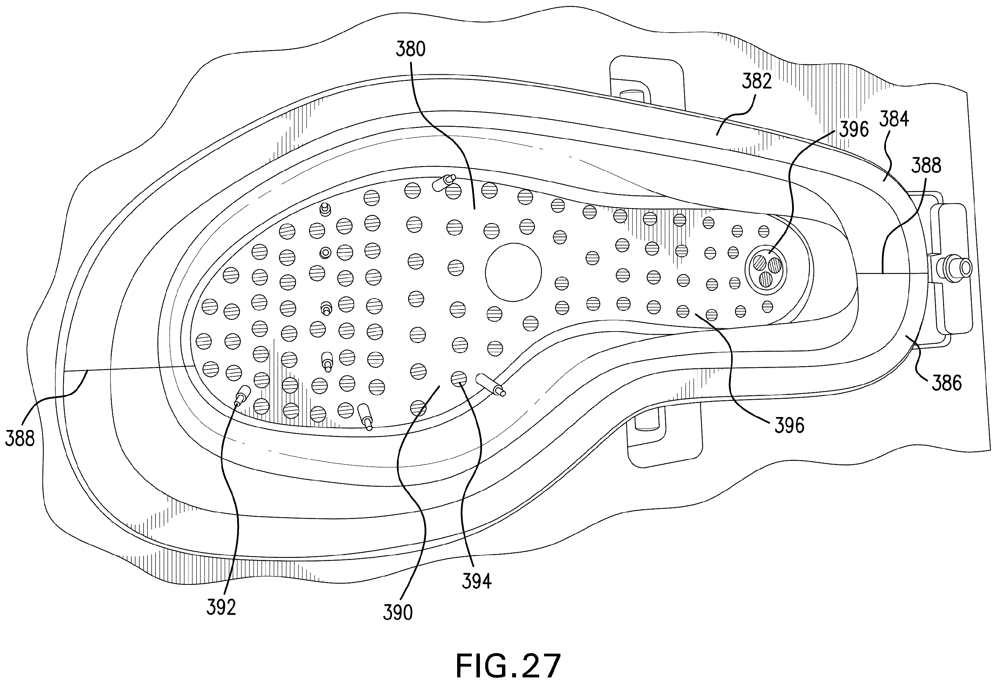

FIG. 27 shows a mold portion 380 and securing component 382. Securing components may be positioned such that they engage at least a portion of an element and a portion of the mold portion. Securing component 382 includes parts 384, 386. The two parts 384, 386 meet at seams 388 to further define a molding cavity 390 as well as maintain a position of an element. In some embodiments, molding portions may include multiple filling gates and multiple steam vents.

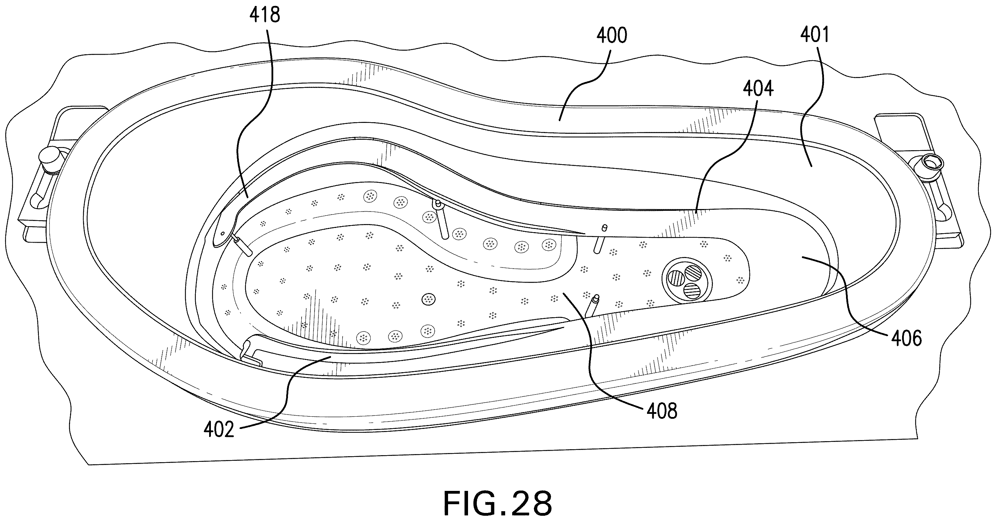

As shown in FIG. 28, the securing component 400 engages external tabs (shown in FIG. 26) and positioning sector 366 (shown in FIG. 26). In particular, plate 402 positioned on positioning component is secured by the addition of the securing component 400 that is positioned proximate positioning sector (not shown). For instance, securing component 400 is positioned on a ledge such that external tabs (not shown) are disposed between securing component 400 and ledge (not shown). The securing component 400 thereby holds plate 402 in place in mold portion 404.

As shown in FIG. 28, the securing component 400 and the mold portion 404 define cavity 406 into which particle foam is loaded. Thus, the securing component may define the area into which foam particles will be placed as well as the portion of the element, for example, the plate, which contacts the foam particles.

FIGs. 27-29 show mold portions 380, 404 with securing components 382, 400 positioned therein. The securing component may be either a single part 400 (depicted in FIG. 28) or it may be formed from multiple parts 384, 386 (shown in FIG. 27). As shown the securing component helps define the mold cavity and rests on portions of the mold. FIG. 27 depicts mold portion 380 having pins 392, vents 394, and gate 396 positioned on a face 390 of mold portion 380.

A securing component may be positioned to hold an element such as a plate in place during formation of an article, including loading, movement, and/or fusion. The securing component engages portions of the element to reduce and/or inhibit movement of the element within the mold cavity. The securing component engages both a portion of the element and at least some of the mold portion. In some embodiments, two or more elements may be secured using a securing component.

A securing component may include one or more sections. A form of the securing component may be determined by the shape of the element being secured. In some embodiments, the securing component may include but is not limited to one or more rims, frames, rings, clamps, screws, bolts, flanges, or combinations thereof.

In an example shown in FIG. 28, a securing component 400 is positioned to hold the element 418 in place. The securing component may close against a positioning component (not shown) in the mold portion. Walls 401 of the securing component 400 and a face 408 of the mold define a portion of a cavity 406 in which the article is formed.

In some embodiments, securing components and/or positioning components may have complimentary geometries. For example, the securing component and the positioning component may have recesses and/or projections that engage each other during use. Further, securing components and/or positioning components may have geometries such as recesses and/or projections that corresponds to a portion of the plate. This may allow the securing component and second positioning component to close on a plate and thereby holding the plate in place, while forming a cavity.

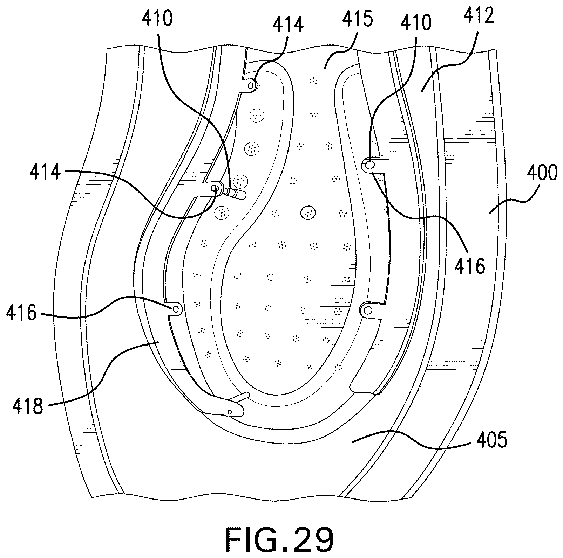

As shown in FIG. 29 pins 410 positioned in the mold portion 412 engage holes 414 on internal tabs 416 of plate 418. Pins may be configured to line up with and be inserted into holes on the plate. For example, holes 414 within internal tabs 416. In some embodiments, pins may engage holes on a body of a plate. Further, FIG. 29 depicts a mold cavity that is defined by surface 415 of the mold portion and walls 405 of the securing component 400. Plate 418 is positioned within the mold cavity.

In some instances, pins may have a diameter that varies along a length of the pin. In some embodiments, openings in the elements may have a diameter that is larger than a diameter near a top of a pin and smaller than a diameter further down the pin. This may restrict movement of an element beyond the desired position during use. Engaging components, in some instances include geometries for engaging elements such as cut-outs, slots, etc.

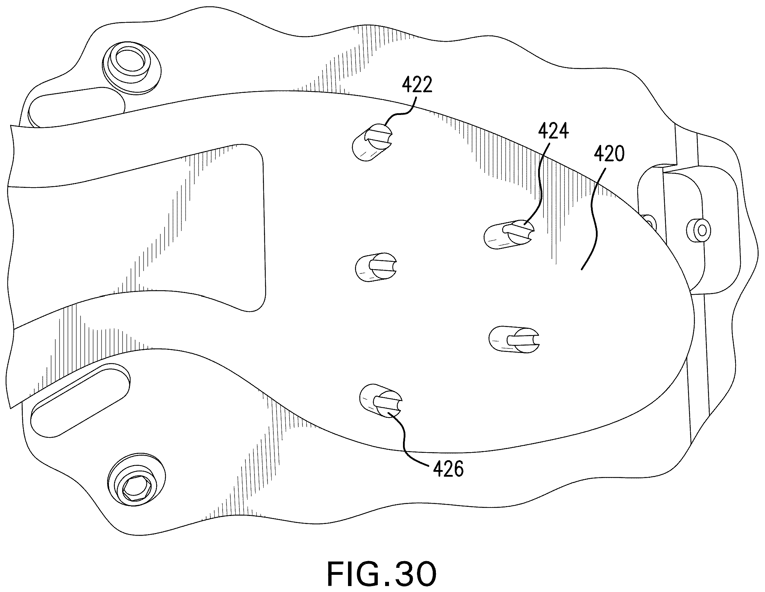

FIG. 30 illustrates a porous structure 420, which may be included in a top portion and/or a bottom portion of a mold. Porous structure 420 may allow steam to be more evenly distributed across the particles in the mold than may be achieved with one or more steam vents, thus allowing a for a more consistent heating and fusion of the particles. Such a porous structure may be used on one or more faces of a mold portion used to form an article from particle foam.

As shown in FIG. 30, pin 422 has slot 424 running through a portion of its head 426 that engages one or more elements. For example, multiple elements may engage pins in a given article formation process. In some embodiments, a combination different engaging components may be used to secure an element.

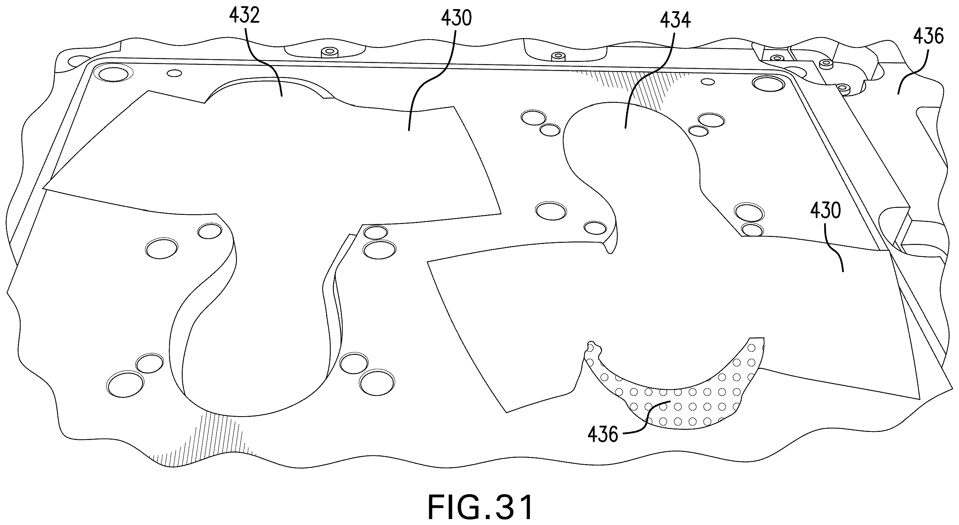

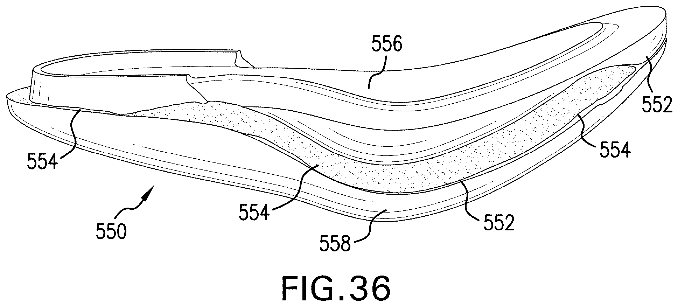

FIG. 31 illustrates textile elements 430 positioned in mold portions 432, 434. Textile element 430 may be positioned over particle foam midsole 436 in mold. FIG. 36 uses circles on the particle foam midsole. While the particles are depicted as circles that are not continuous this is meant to illustrate only where the particle foam material is found. The particle foam material after fusion would be continuous with the particles fused to each other. Prior to fusion the particles would also be touching due to the overloading of the mold with particles to ensure proper fusion and compression.

In some instances, a textile, film, and/or foil element may be positioned between a top mold portion or a bottom mold portion of a mold. Textile, film, and/or foil elements used in this process may have unique characteristics, and may provide, among other things, increased durability and strength. For example, textile elements, film elements, and/or foil elements may be placed into a mold portion during formation, fused to a portion of the midsole, and then a portion of the elements may be used to wrap around the midsoles. These elements may be used to impart lateral stability, durability, and/or other properties of interest to the midsole. In a particular embodiment, one or more textile elements may be used to wrap a portion of a midsole.

In some embodiments, a textile, film, and/or foil element may be included in mold portion as well as a further element such as a plate. Alternately, multiple elements may be positioned in an article in combination with a textile, film, and/or foil. In some embodiments, a textile element may be included in a mold portion in the absence of a plate.

In some embodiments, and as may be seen in FIG. 31, textile element 430 is held in place against a portion of mold portion 432, 434 using vacuum pressure. For instance, vacuum pressure may be applied such that suction is applied to a textile element through steam vents and/or a porous structure of the mold portion. By utilizing a vacuum or negative pressure a textile element may be held in place in a mold portion. In some embodiments, vacuum or negative pressure may be used to position and/or hold in position one of more elements made from textiles, foils, films, strands, filaments, or other materials.

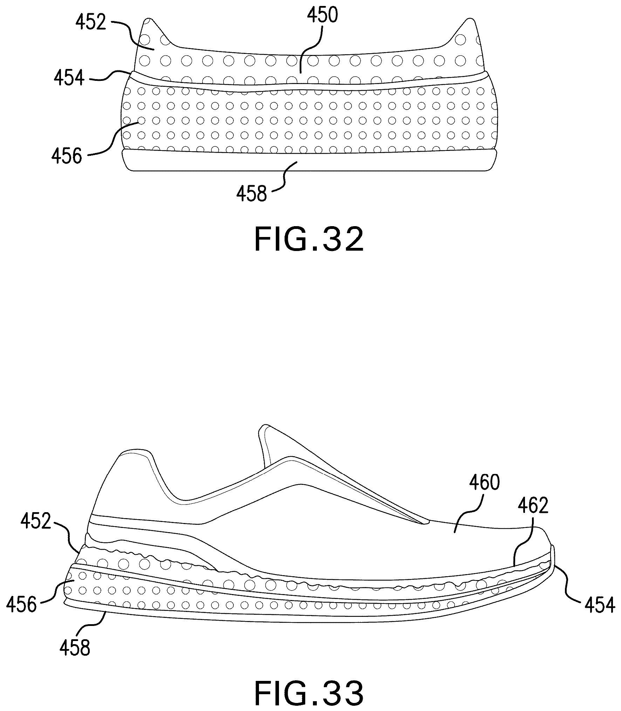

FIG. 32 illustrates a midsole 450. Midsole 450 may include a plate 454. As shown, midsole 450 includes foam regions 452, 456. Foam regions may include particles that have different shapes and/or sizes as is illustrated by the representative patterns in regions 452, 456. These patterns in the FIG. 32 are meant to be representative and are not to scale. In specific embodiments, fused foam particles would be continuous and substantially maintain particle shape. Mold regions 452, 456 and plate 454 are coupled to each other during a fusion process. Midsole 450 is coupled to outsole 458. In some embodiments, each of the foam regions may have different properties. For example, one of the foam regions may have a higher density than the other. In a further example, a first foam region may have a higher cushioning value than a second foam region. In some instances, the mold regions may have the same properties.

Properties in molded articles, such as midsoles, may vary along a length, width, and/or height of the article. Further, properties may vary from one region in an article to another region. For example, properties of a first midsole region may differ from a second midsole region. In specific embodiments, properties of a midsole region may vary along a length, width, and/or height of the midsole region.

A midsole as described herein may be a single, or monolithic structure, meaning that the structure is a single component and is not, for example, a plurality of components glued together using secondary bonding processes.

A side view of a midsole of interest used in a shoe is shown in FIG. 33. Midsole 462 is coupled to upper 460. Midsole portions, elements, and an outsole may be coupled to each other during the fusion process. For example, to form a midsole like this during manufacturing mold portions are loaded with particles that have a first property in a first region and particles that have a second property in a second region. Two mold portions may be positioned proximate each other such that an element is positioned between first region and second region.

Thus, after formation of the fused particles foam formed in the first region may have different properties than fused properties in the second region. These differences in properties in the regions may be due to material differences and/or manufacturing methods including but not limited to addition of an additive, for example, an addition of a thermoplastic and/or thermoset polymer powder, an amount of energy applied, an amount of pressure applied, a permeability of mold portions to steam, and/or a time frame over which energy or pressure is applied.

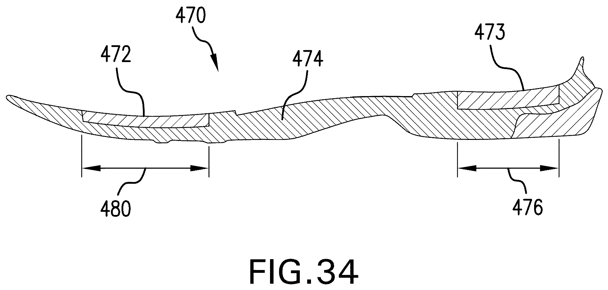

As shown in FIG. 34, midsole 470 includes elements 472, 473 positioned in partial regions 476, 480 formed in the midsole. The partial regions may have different properties than each other. Embodiments of a midsole may include partial regions that include different properties than are found in a majority of the midsole. In some instances, the partial regions may be tuned to specific areas in the midsole. For example, a partial region in a forefoot will likely have a different value for both flexibility and/or cushioning than a partial region in the heel. Further, a midsole area 474 that extends a length of the midsole will have different values as well. In particular, the midsole area may have properties that differ from the properties in the partial regions. The first and the second regions may be compressed differently, that is under different pressures, temperatures, and/or different base materials may be precisely manufactured in one fabrication method.

During formation of midsoles having partial regions using the double or multiple crack method partial regions may be subjected to application of energy. Use of two or more cracks may ensure that partial regions are filled and fused effectively. Energy may be applied by steam, heat, electromagnetic radiation, or combinations thereof to a midsole or portions thereof. In particular, steam may be fed to both partial regions. In some embodiments this may occur in a particular order across the midsole. For example, a first partial region may be fused first and then a second partial region may be fused. In addition, the reminder of the midsole may be fused subsequently. Fusion of the particle materials may occur in a mold that includes multiple mold portions and/or multiple elements. Alternatively, energy may be provided across the midsole such that the partial regions are fused simultaneously.

As discussed herein a midsole may include randomly arranged particles of an expanded material. In some embodiments, a whole midsole comprises expanded material.

In further embodiments, only one or several partial regions of the midsole comprise expanded material, while the rest of the midsole comprises non-expanded material. By a suitable combination of different expanded and/or non-expanded materials, a midsole with the desired cushioning and stability properties may be manufactured. The particles of the expanded material may comprise, in particular, one or more of the following materials: expanded ethylene-vinyl-acetate (eEVA), expanded thermoplastic urethane (eTPU), expanded polypropylene (ePP), expanded polyamide (ePA), expanded polyether block amide (ePEBA), expanded polyoxymethylene (ePOM), expanded polystyrene (PS), expanded polyethylene (ePE), expanded polyoxyethylene (ePOE), and expanded ethylene propylene diene monomer (eEPDM). Each of these materials comprises specific characteristic properties which, according to the profile requirements for the sole, may be used advantageously for the manufacture of the shoe sole. So, in particular, the eTPU has excellent cushioning properties that remain unchanged also at lower or higher temperatures. Furthermore, eTPU is very elastic and, in the case of compression which may occur when the foot impacts on the ground, the eTPU returns the stored energy almost completely to the foot during subsequent expansion. This increases the efficiency of the movement. In contrast thereto, ePP has an increased stability together with a very low weight. In certain embodiments, the midsole comprises partial regions of eTPU in the forefoot region (and in particular beneath the toes) and in the heel area, while the rest of the midsole comprises ePP, eEVA, or another expanded or non-expanded material. A midsole that includes eTPU in the forefoot and heel area and ePP in the remaining zones protects the foot and the joints of the wearer against injuries, due to good cushioning properties of eTPU and low weight of ePP, which keeps the weight of the sole low. Such a combination may be advantageous for a sole of a running shoe, for example.

According to the requirement profile of the midsole, one or more of materials may be used for the manufacture due to their properties. Particles for use in the embodiments described herein may, for example, include at least one of the following materials: expanded thermoplastic polyurethane (eTPU), expanded polyamide (ePA), expanded polyether-block-amide (ePEBA), polylactide (PLA), polyether-block-amide (PEBA), polyethylene terephthalate (PET), polybutylene terephthalate (PBT) and thermoplastic polyester ether elastomer (TPEE).

In addition, some embodiments may include particles made from at least one of polyamides such as homopolyamide, copolyamide, polyetherblockamide, and polyphthalamide, polyester, polyetherketones such as polyether ketone (PEK), polyether ether ketone (PEEK), and polyetherketoneketone (PEKK), and polyolefins such as polypropylene (PP), polyethylene (PE), olefin co-block polymer (OBC), polyolefine elastomer (POE), polyethylene co-vinyl acetate (EVA), polybutene (PB), and polyisobutylene (PIB).

Particles for use in this method may have diameters in a range from about 0.5 mm to about 10 mm. In some instances, diameters used may be in a range from about 1 mm to about 8 mm. In a particular instance, particles used in this method may have diameters in a range from about 2 mm to about 7 mm.

In some embodiments, particles may be selected that have a particular shape. For example, particles may be spherical, ovoid, cylindrical, or mixtures thereof. In a particular embodiment, particles for use in a foamed article made according to the method described herein may generally be ovoid in shape.

Sizes and/or shapes of particles within an article may vary. For example, some zones within an article may include a specific size and shape of particles based on the desired properties for that zone. In some embodiments, multiple zones in an article may have a predetermined size and/or shape for the particles to be used in each zone.

Particles used in processes and midsoles described herein may be selected based on the properties of the particles. In some instances, a molded element, such as a midsole, may include a single particle type. However, particles may also be selected for specific areas of a molded element in certain embodiments. For example, particles may be arranged in a mold based on properties of the material and/or characteristics desired in the molded component. In particular, particles may be aligned relative to each other and/or otherwise intentionally arranged within the mold. In some instances, the particles may be randomly arranged within the mold.

In a particular example, components that include particles from at least one of the materials mentioned above distinguish themselves by having very good cushioning properties, good elasticity, and energy return, and they may at the same time be very lightweight. Their properties may also be temperature independent to a large extent. It may therefore be beneficial to use mixtures (or regions) of different expanded particles in the mold, which may then be formed into a component using the methods described herein.

In some instances, particles may be selectively positioned in areas of a mold based on diameters of the particles. This may impart desired properties to the areas of the midsole.

Materials loaded into a mold may include more than one base material. For example, in a particular embodiment expanded PP and expanded TPU may be used in a first area of the midsole while an expanded TPU that has a different particle size may be used in a second area of the midsole. In addition, materials of different colors, shapes, and sizes may be used in separate areas of a midsole. Utilizing a double-sided crack or multi-sided crack forming process may allow for increased design flexibility as the materials can be delivered to specific areas of the mold portions. In particular, a double-sided crack forming process may be used in conjunction with a double or multi-crack, for example, using subparts within the mold portions.

Utilizing particles of different sizes, shapes, and/or colors may increase design and/or functional options of the finished products. Components may be fused together by steam energy under pressure and/or using to welt together and form one unique component by the methods and processes described above.

Elements may be positioned between portions of the mold. For example, an element may be positioned between a top portion and a bottom portion of a mold. In some embodiments, the element may be positioned such that it engages engaging members, for example, pins, a portion of the mold, a securing component, or a combination thereof.

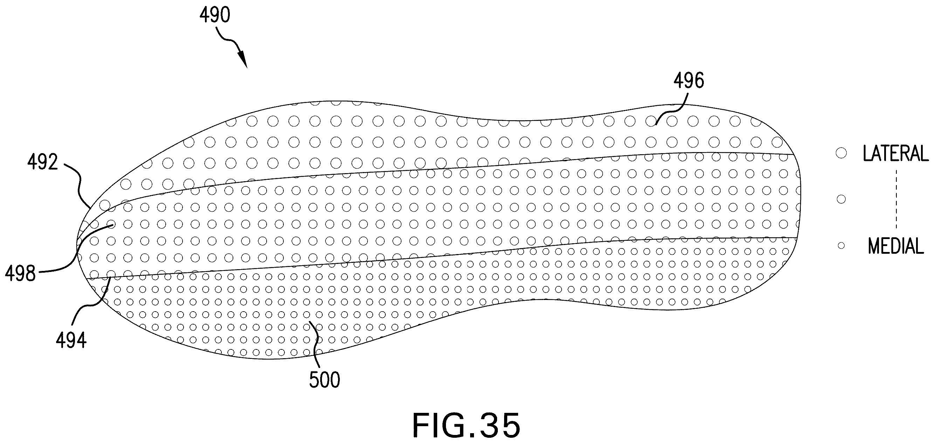

In some embodiments, a midsole may have multiple zones of differing properties from a lateral to a medial side. For example, a mold portion may include subparts on a surface that move independently of each other. Subparts may move independently of each other to allow for each zone to be subjected to a different level of compression. Formation of such a midsole may use multiple mold portions, subparts, elements, and/or inlets to provide particle materials to the zones. Elements may be positioned between the differing materials. As shown in FIG. 35, a bottom view of the midsole 490, different expanded materials 496, 498, 500 are used in different zones of the midsole separated by elements 492, 494. As shown, in some embodiments the elements may be positioned along the longitudinal axis of the midsole but vertically through the insole. In this manner, the midsole may be divided into medial, center, and lateral zones. Particles in the various regions may include materials having different particle sizes and/or shapes. FIG. 35 is an illustrative representation of particle foam materials having different sizes and/or shapes used in different regions. While FIG. 35 depicts particle foams having a regular pattern this is meant to illustrate only that each of the regions have different particles in them. The fused particle foams in these regions would be continuous and have a variable surface.

Midsoles formed according the be formed in a series of steps that allow for fusion of expanded foam to all of the elements and/or external parts. For example, a method described herein may allow for a midsole and outsole combination as shown in FIG. 33 where the midsole sections, elements and/or outsole are fused together without use of additional adhesives. Using such a process may allow for formation of a midsole-outsole monolithic structure, meaning that the structure is a single component and is not, for example, a plurality of components glued together using secondary bonding processes.

Midsoles may include an element at the juncture between two or more materials where a mold line is present. For example, as shown in FIG. 36 a midsole 550 may have a mold line 552. In some embodiments, plate 554 is disposed in midsole 550 as part of the monolithic structure proximate mold line 552. As shown in FIG. 36, plate 554 is positioned proximate the mold line 552. As shown an upper portion 556 of the midsole has a different profile than the lower portion 558 of the midsole. In particular, as shown in FIG. 36 the lower portion 558 and plate 554 extend beyond the upper portion 556 at heel region 560.

For example, in some embodiments, the upper portion and/or lower portion may be shaped such that it engages an upper of the shoe, provides more cushioning to an area of the foot, and/or accommodates a design or technical element.

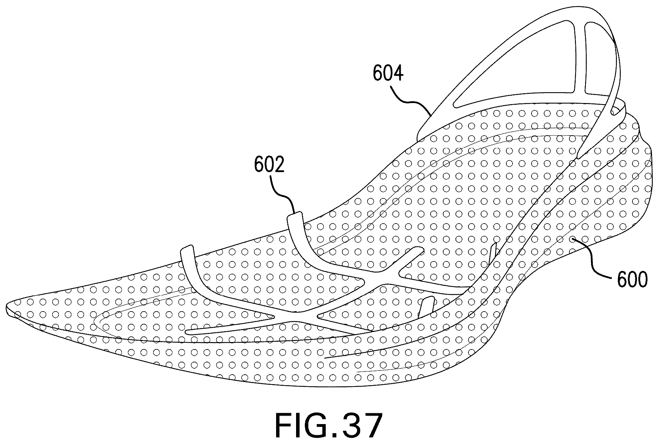

A further embodiment is shown in FIG. 37, depicts a midsole 600 formed from a fused particle foam having elements 602, 604 positioned in the midsole and that extend beyond the surfaces of the midsole in a finished midsole. Foam particles in midsole 600 shown in FIG. 37 are shown as representative circles, the foam particles are not depicted to scale. Further, fused foam particles would be continuous and substantially maintain particle shape in a such an embodiment. Portions of the element (not shown) are embedded in the midsole during the formation process using a double-sided crack process. Mold portions may be modified to accommodate portions of the element that will extend beyond the midsole in some embodiments. In some embodiments, a multi-crack system may be used to ensure that particles are properly dispersed in the various regions surrounding the elements.

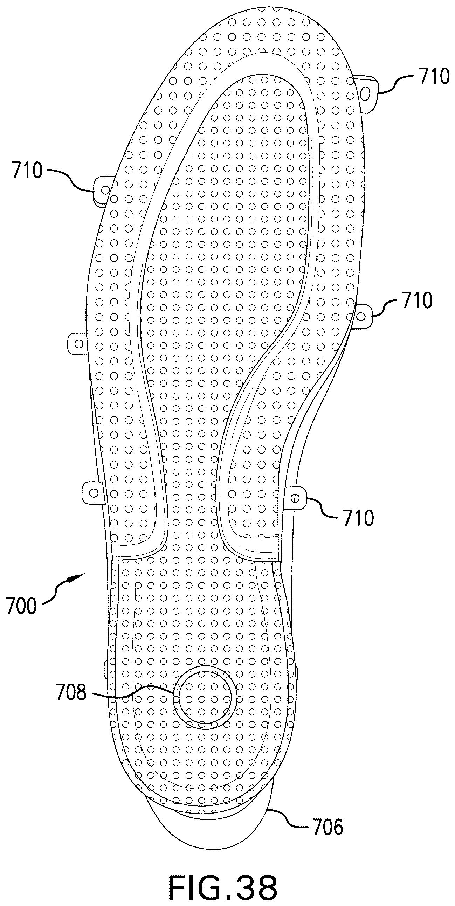

FIG. 38 depicts a top view of a midsole 700 that includes an element 706 having multiple positioning members 710 positioned in the midsole formed from a fused foam particles. While FIG. 38 depicts foam particles as circles this is meant merely as a representation. In specific embodiments, fused foam particles would be continuous and substantially maintain particle shape. A portion of the element extends beyond the midsole as shown. Alternately, an element may be completely embedded in the midsole. Visible on the surface of the midsole is gate impression 708. Gate impression reflects the position of a gate for loading particles on the mold portion during formation of the midsole. In some embodiments, the gate may include a cover having a design that may be imparted to the midsole during formation. After loading of the particles into the mold cavity, the cover may be positioned on the gate to inhibit and/or prevent movement of the particles.

As described herein positioning members (e.g., projections, tabs, openings, etc.) on an element may be designed to removably engage portions of an element during formation. In the example depicted in FIG. 38, positioning members 710 are placed at predetermined locations on an element (not shown). These locations may be determined based on the design of an element (e.g., materials, shape, etc), mold portion, mold, requirements for properties of the foam material, a design and/or required properties for the midsole, molding conditions, etc. After placement of the positioning members on the element, the element may be positioned proximate a portion of a mold. Alternately, some processes may include positioning at least some of the positioning members after at least a portion of the element is positioned within a mold portion and/or mold.

Some embodiments may include an element that extends from one mold portion into one or more additional mold portions. Alternately, multiple elements may be placed in a single mold portion and secured using positioning members. Positioning members may engage with features of an element, a mold portion, mold, and/or securing component. Engaging members of mold portions, molds, and/or securing components may include various geometries such as projections, protrusions, ledges, overhangs, hooks, pins, columns, recesses, openings, etc.

Positioning members may be placed on an element prior to and/or during positioning of the element within a mold portion and/or a mold. Positioning members may engage with a securing component, a mold portion, and/or a mold such that the element remains in place during article formation. After formation of the article is complete, in certain instances, the positioning members may be removed from the article.

Positioning members may be positioned such that an element is fully embedded in the article. Further, the position of the positioning members, a design and/or a position of the element, and/or loading of the particles may be adjusted such that the element is fully embedded in the article. For example, during loading particles may be loaded into a mold such that the entire element is covered by the particles. Alternately, the element, positioning members, and/or loading of the particles may be controlled such that the elements and/or portions thereof are visible on portions of the finished article.

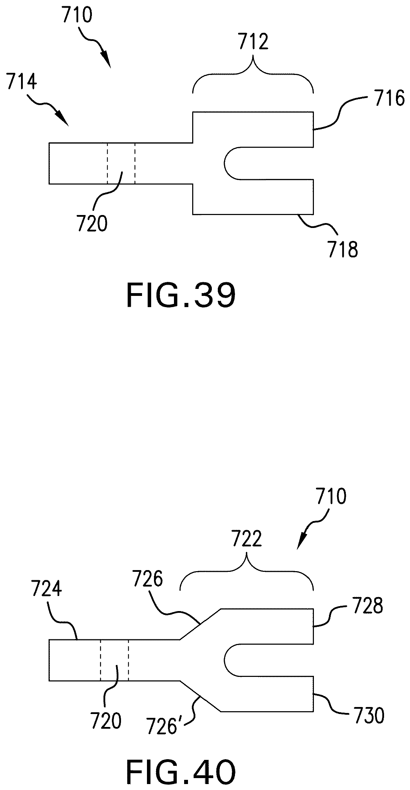

Examples of positioning members are depicted in FIGs. 39-44. For example, FIGs. 39-40 depict side views of embodiments of a positioning member. Positioning members may be formed in part from various materials including, but not limited to metals such as aluminum and alloys such as steel, plastics such as polyamides, in particular as polyamide-11 and/or polyamide-12, rubbers, composites, etc. For example, a metal positioning member may include rubber on parts that engage elements and/or particle foam.

Selection of materials for mold portions, securing components, elements, and/or positioning components may be determined by a type of energy used during the method. Materials used may include, but are not limited to metals such as steel, aluminum, thermosets such as epoxy resin, and plastics such as polytetrafluoroethylene (PTFE), polyamides including, for example, polyamide-11 and/or polyamide-12, polyethylene (PE), polyetheretherketone (PEEK), and/or other materials which are structurally stable during electromagnetic field application.

In embodiments where the energy source is electromagnetic radiation it may be desirable to use materials suitable for use. For example, if electromagnetic radiation is used, for example, microwave or radio frequency heating it may be desirable to utilize a securing component formed from PTFE.

In contrast, if steam is used it may be desirable to use metal for parts that may have the most contact with the steam and/or heat such as mold portions, securing components, and/or positioning components.

As the positioning members are removable, they may be reused. Reusable positioning members may reduce the materials necessary to produce an article. Thus, using reusable positioning members may increase the sustainability of a product and/or method.

In a particular embodiment, a positioning member may be formed from a material that does not bond to particle foam materials. For example, a positioning member or a portion thereof that is positioned proximate the particle foam may be made from a material that does not bond to the particle foam. Specifically, plastic materials that do not bond to foam particles and/or elements, in particular, polyamides such as polyamide-11 and/or polyamide-12 may be used to form portions of the positioning member. In particular, portions of a positioning member that contact foam particles and/or the element may be formed from polyamide-11 and/or polyamide-12.

As shown in FIG. 39, positioning members 710 include coupling construct 712 and engaging construct 714. Coupling constructs may be designed to engage a portion of an element using a frictional fit joint, a snap-fit joint, a frictional form fitting joint, a form fitting joint, surface finishes, frictional elements, etc.

A coupling construct may be designed such that it couples to a portion of an element using one of more of a surface configurations having a predetermined coefficient of friction, a predetermined surface roughness (e.g., as measured in surface roughness Ra (µm)), frictional elements such as protrusions, hooks, knobs, bulges, depressions, undercuts, detents, and/or openings. In some embodiments, portions of the coupling construct may include a deformable material like rubber to reduce and/or inhibit damage to an element and/or particle foam.

Coupling construct 712 includes elongated segments 716, 718 as depicted in FIG. 39. Lengths of the elongated segments may be in a range from about 1 mm to about 15 mm. In some embodiments, a length of the elongated segments may be in a range from about 5 mm to about 10 mm. For example, some embodiments may include elongated segments having a length in a range from about 6 mm to about 8 mm. In some embodiments, a preferred length of the elongated segments may be dependent on a design and/or position of the element and/or positioning components during use.

Elongated segments may engage a portion of an element. Elongated segments may, in some embodiments, be designed such that they exert a force on a portion of the element positioned between the elongated segments during use. In such embodiments, the elongated segments may act as tongs and/or clamps. For example, the engaging construct may form a joint with a portion of an element. In such instances, a portion of element may be designed such that it engages a portion of the coupling construct.

In particular, elongated segments of the coupling construct and/or portions of the element may include surfaces having a predetermined coefficient of friction, a predetermined surface roughness, frictional elements such as protrusions, hooks, knobs, bulges, depressions, undercuts, detents, openings, and/or a rubber. In some embodiments, elongated segments of a positioning component may include rubber to protect the element. For example, portions of the elongated segments may include a continuous or discontinuous rubber layer. In some embodiments, dots of rubber may be positioned on surfaces of the elongated segments that may contact the element.

A surface of the coupling construct may be designed such that it couples to a surface of the element in such a manner that a predetermined force is required to separate the coupling construct from the element.

In some embodiments, a securing component may exert a force on the engaging construct by securing the engaging construct against a portion of a mold. For example, the engaging construct may be positioned between a ledge on a mold portion and a portion of a securing component.

As shown in FIGs. 39-40, positioning components 710 include section 720 which corresponds to an opening (not shown). An opening in the positioning component may be used to engage a pin, column, or other engaging member positioned in a mold portion. A length of the engaging construct may be determined by properties of the mold portions, the securing component(s), and/or the mold that the positioning component engages. For example, a length of the coupling construct may be selected such that it does not extend beyond a securing component when engaging an element in a portion of the mold.

Positioning components may have various geometries. For example, FIG. 40 depicts a side view of a positioning component having a slightly different configuration for the coupling construct 722. Portions 726, 726' of the elongated segments 728, 730 of the coupling construct 722 are shaped. Shaping of portions of the elongated segments may allow for an easier removal of the positioning component from a finished article.

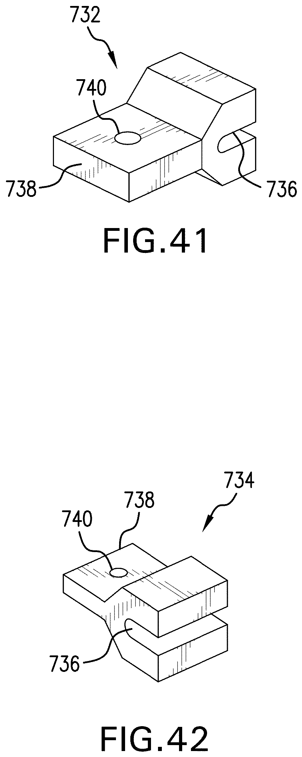

FIGs. 41-42 depict perspective views of an embodiment of a positioning component 732, 734. Slot 736 is designed such that engages a portion of an element. Engaging construct 738 includes opening 740. Openings in the engaging construct may be used to couple the positioning component to one or more of the mold, a mold portion, and/or a securing component using engaging members such as protrusions, ledges, overhangs, hooks, pins, columns, recesses, etc. For example, FIG. 42 depicts a perspective view of a positioning component positionable within a mold and removable from a finished article. In a specific embodiment, an opening in an engaging construct connected to an element may engage a pin positioned in a mold portion to position the attached element in the mold portion.

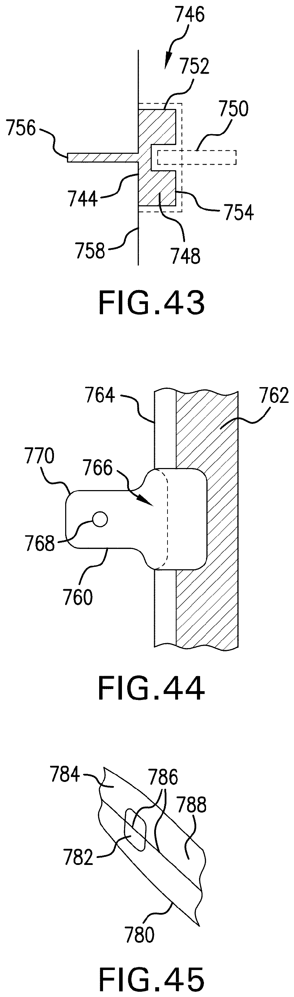

FIG. 43 depicts a cross-sectional view of a removable positioning component 744 coupled to an article 746. As shown the coupling construct 748 is positioned within article 746. A portion of the element 750 is shown coupling to the positioning component 744 such that the segments 752, 754 engage the element 750. In some embodiments, a design of the positioning component may be such that the segments of the coupling construct exert a compressive force on a portion of the element positioned between the segments.

Engaging construct 756 of the positioning component 744 emerges from a surface 758 of the article 746. This portion of the engaging construct may be used in conjunction with a securing component to secure the positioning component and/or element during the formation and/or fusion process for an article.

In some embodiments, an element such as a plate may be embedded in an article, for example, a midsole. FIG. 44 depicts a schematic of a top view of a positioning component 760 coupled to a portion of a plate 762 that is embedded in a midsole 764. As shown, portion 766 of the midsole material is reduced proximate the positioning component 760. This reduction in the midsole material, for example, foam material may allow for easier removal of the positioning component after formation and/or fusion. Opening 768 in the engaging construct 770 is used to position and/or secure the plate during the formation and/or fusion process.

After formation and/or fusion is complete positioning components may be removed from a finished article. As shown in FIG. 45, positioning component (not shown) has been removed from a portion of an article 780 leaving an indentation 782 in a sidewall 784 of the article 780. A size of the indentation or pocket may be determined by the size of the positioning component. In some embodiments, foam material proximate the positioning component may be trimmed after fusion.

Element 786 is shown extending through the article to the exterior surface 788 of the article 780. The element 786 extends continuously along the exterior surface of the article 780 including at the indentation.

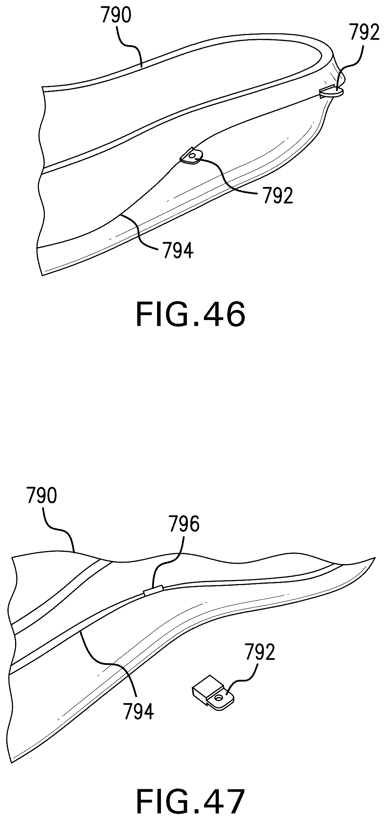

An example of a midsole 790 formed using removable positioning components 792 is shown in FIG. 46. As shown the depicts an element 794 extending through the midsole 790. During formation multiple positioning components coupled to the element were used to position and secure the element in a desired position. In this manner, foam material was loaded and fused in a predetermined configuration surrounding at least in part the element and positioning component. As shown element 794 is visible on portions a surface of the midsole 790. Alternate embodiments may include elements completely surrounded by foam material.

In some embodiments, one or more elements may be positioned and/or secured using positioning components during the formation process. This may allow for loading of particles and/or fusing of particles in predetermined configurations and/or under predetermined conditions. As the foam particles are loaded particles having particular properties may be loaded into specific areas of mold portions via inlets and/or feeding tubes. This may result in zones within the midsole that have particular properties of interest. Further in some embodiments, a specific area of foam may be subjected to a specific and predetermined set of conditions such that the resulting foam has a desired set of properties.

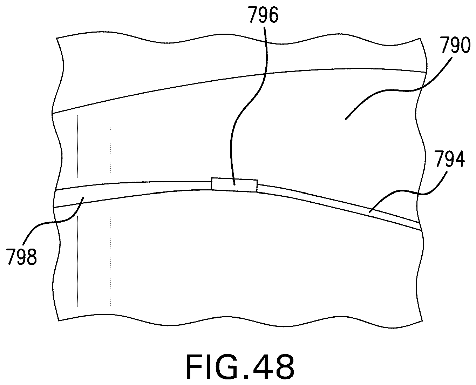

After formation of the midsole, positioning components may be removed from the midsole such that the midsole can be used in a finished shoe. For example, FIG. 47 depicts a positioning component 792 that has been removed from opening 796 in midsole 790. An enlarged view of opening 796 from which the positioning component was removed is shown in FIG. 48. Further, portions of the element 794 are visible proximate the surface of the midsole and/or mold line 798.

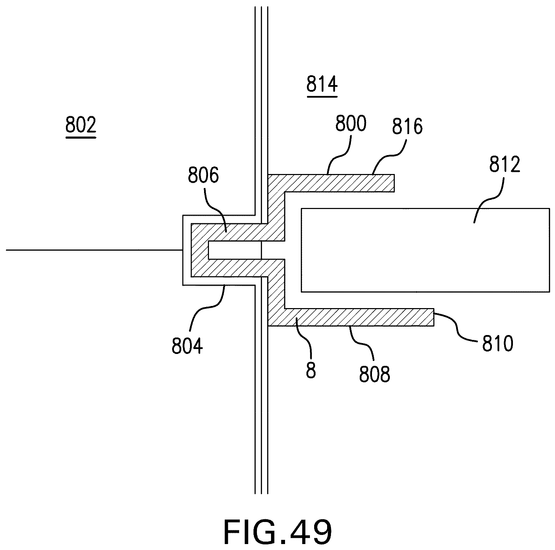

As shown in FIG. 49, positioning component 800 is coupled a mold 802 at engaging member 804. Alternately, a positioning component may be secured in position by a securing component. In some embodiments, a positioning component may be secured by a combination for engaging members, a mold, and/or a positioning component. In some embodiments, positioning components and/or mold portions may include interlocking features. For example, interlocking features may include a combination of projections and/or openings that engage each other.

A positioning component 800 includes an engaging construct 806 and a coupling construct 808 as illustrated in FIG. 49. The engaging construct may be used to couple the positioning component to one or more of the mold, a mold portion, and/or a securing component using engaging members such as protrusions, ledges, overhangs, hooks, pins, columns, recesses, etc. As shown in FIG. 49, the engaging construct 806 of the positioning component 800 emerges from a surface of the article 814. This portion of the engaging construct may be used in conjunction with a mold, a securing component, or a mold portion to secure the positioning component and/or element during the formation and/or fusion process for an article.

Coupling construct 808 includes slot 810 that engages a portion of an element 812. As shown the coupling construct 808 is positioned within article 814. A portion of the element 812 is shown coupling to the positioning component 800 such that the segments 816, 818 engage the element 812. In some embodiments, a design of the positioning component may be such that the segments of the coupling construct exert a compressive force on a portion of the element positioned between the segments.

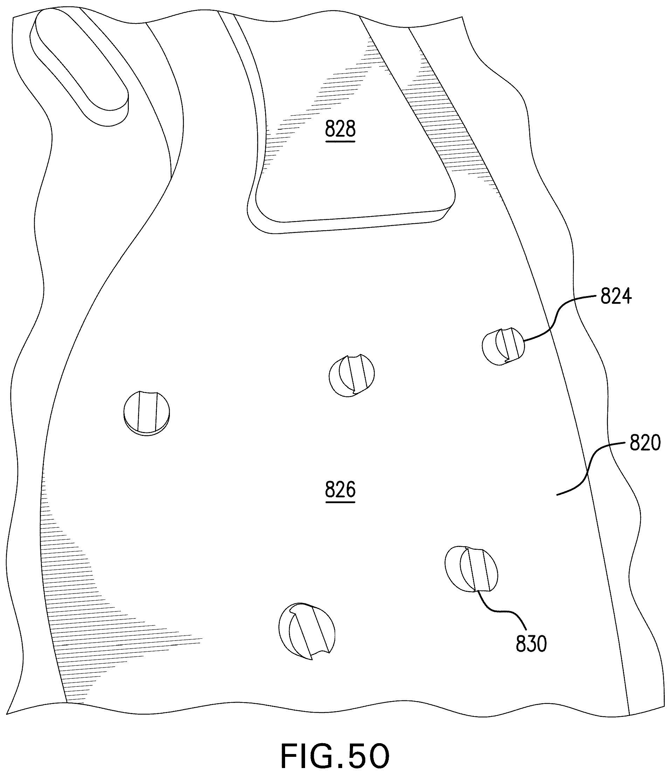

FIG. 50 depicts a perspective view of an embodiment of a surface of a mold portion 820 that includes multiple pins 824 positioned on subpart 826 as well as subpart 828. As shown pins 824 include slots 830 for engaging an element (not shown).

Subparts may have different crack heights and/or geometries. For example, subpart 826 and subpart 828 are individually controlled and thus the crack height differs for each part. When a mold portion includes individually controllable subparts, the crack height, the loading of the particles, and/or the compression of the particles may be controlled. Thus, the foam particles may be compressed with differing forces in different areas of the mold. In some embodiments, different densities of particle foam in different areas of the mold may be obtained. In certain embodiments, variations in density due to different thicknesses in the molding cavity may be levelled out or compensated for.

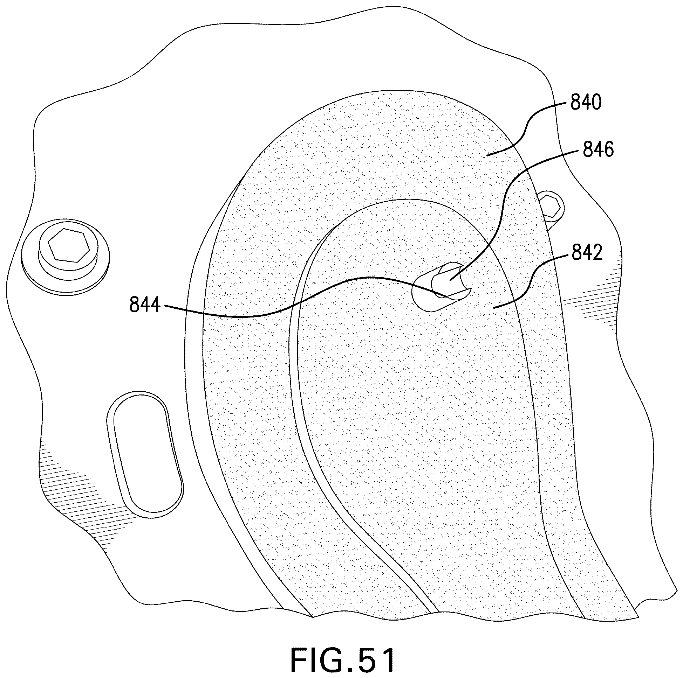

In some embodiments, subparts of mold portions are formed having particular geometries. For example, in FIG. 51 subpart 840 forms a rim around subpart 842. Pin 844 is positioned on subpart 842 having slot 844 to engage an element (not shown). In a particular embodiment, the rim subpart may provide a greater crack height such that particles subject to compression by the rim subpart may experience a higher amount of compression when compared to the other subpart. The greater the crack height, the greater the compression. In some instances, this may cause the particle foam to have a higher density. This may lead to a particle foam that provides more stability in that area. The interior subpart may have a lower crack height and compress the particle foam in its path to a lesser extent. This may allow the interior zone of the particle foam to provide more cushioning than the rim zone. Controlling crack heights of subparts of mold portions may allow for tuning of foam articles such as midsoles.

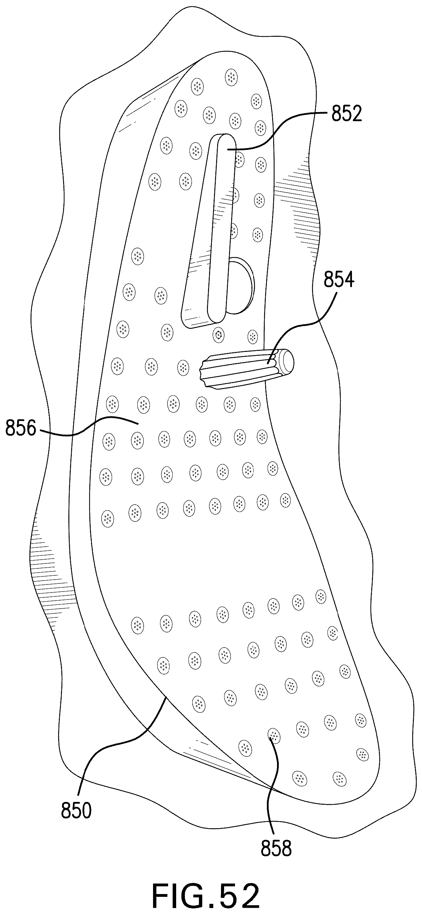

FIG. 52 depicts a perspective view of an embodiment of a surface of a mold portion 850 having multiple subparts 852, 854, 856, vents 858, and filling 860. Subparts 852, 854, 856 are movable during the formation process. As shown in FIG. 52, the subparts of the mold portion have varied geometries and crack heights. Subpart 854 has a fluted cylindrical geometry. Based on the height of the subpart 854 the crack height of subpart 854 may be less than that of subpart 852 or subpart 856. However, to determine crack heights of each of the subparts an amount of movement between an open position and a closed position of the mold positions and/or subparts is measured. Crack heights, in some instances, may correspond to an amount of compression that particles loaded into a molding cavity experience during molding.

When using a double-crack or multi-crack configuration that includes subparts in the mold portions crack heights may vary along a length of the mold. In particular, a crack height may be the amount the molds close on each other.

Thus, as shown subparts can have various geometries, crack heights, and/or positions on the mold portion that can be used to tune zones in articles. In particular, zones of midsoles may be tuned by creating areas of varying density. For example, a density of a zone of the midsole may be increased when an amount of particle foam loaded into a zone is increased and the zone is subjected to compression equivalent to a zone having less particles. Further, some subparts may create voids in the midsole. Voids may allow for designs having air pockets within portions of a midsole. For example, some voids may be used to provide cushioning, airflow, predetermined deformation characteristics such a shear value, strength, moisture wicking, stiffeners, for example, objects having a predetermined stiffness, or other properties of interest. In some instances, objects may be positioned in the voids to impart specific properties in a midsole. For example, a user may be able to customize characteristics of a shoe that incorporates a midsole formed by the processes described herein by positioning objects such as stiffeners in the voids of the midsole.

In an embodiment, a void through a midsole formed during fusion may be positioned such that it provides access to an element embedded in the midsole. In particular, an external object engager having threading may be accessible through a void in the particle foam material. For example, track spikes may be coupled to an external object engager positioned in a particle foam midsole through using threads on both the spikes and external object engager. In certain instances, the voids providing access to an element in a midsole may be formed by a member used to secure the element during fusion. Alternately, such voids may be formed by subparts of one or more mold portions.

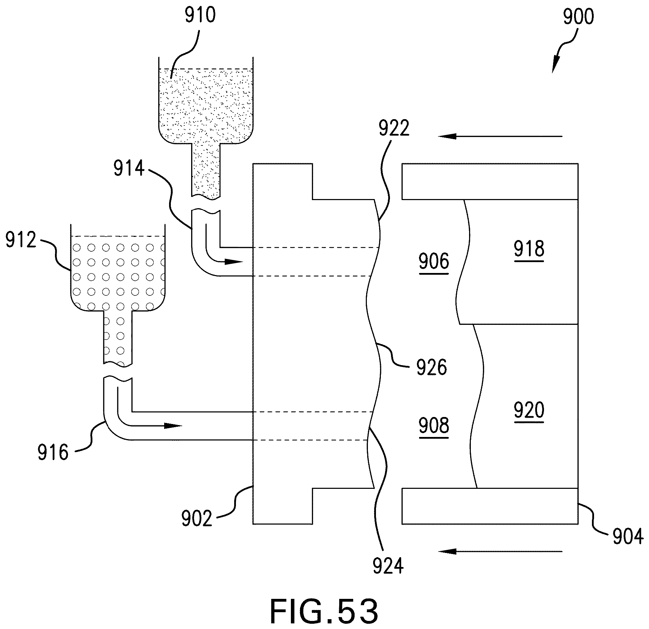

An example of a mold configuration for a double crack mold process is depicted in FIG. 53. Mold 900 includes fixed mold portion 902 and movable mold portion 904. As shown foam particles may be delivered to mold cavities 906, 908 from hoppers 910, 912 via inlets 914, 916. Surfaces of the mold portions and/or subparts define the mold cavities. For example, mold cavity 906 is defined by surface of subpart 918 and a segment 922 of mold surface 926 of mold portion 902 while mold cavity 908 is defined by a surface of subpart 920 and another segment 924 of a mold surface 926 of mold portion 904. Subparts 918, 920 move toward mold surface 926 during a formation process from an open to a closed mold position. Differing geometries of the subparts may create different crack heights in the cavities defined by the subparts and the surfaces of the fixed mold portion. This may create different levels of compression in particle foam materials loaded into the cavities during use. Materials loaded into the hoppers may differ based on the desired properties of the article. For example, as shown in FIG. 53 materials loaded into the hoppers 910, 912 have different properties. In particular, particles may have different dimensions, compositions, chemical structures, levels of foaming, melt temperatures, and/or other properties of interest.

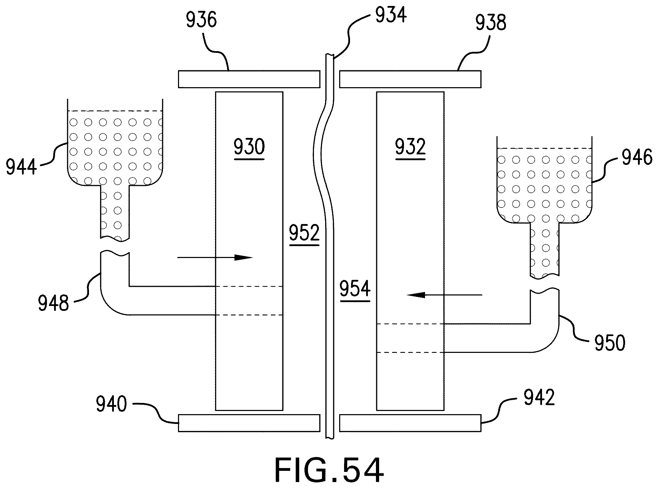

In contrast, FIG. 54 depicts a mold configuration for a double-sided crack process. Mold portions 930, 932 are movable during a formation process. Positioned between the mold portions 930, 932 is an element 934. The element 934 is secured by securing components 936, 938, 940, 942. Securing components 936, 938, 940, 942 are fixed such that during movement of the mold portions 930, 932 the securing components hold the element 934 securely in place. During loading particles from hoppers 944, 946 flow through inlets 948, 950 into cavities 952, 954. In some embodiments, different materials may be loaded into the hoppers such that the cavities have particles having different dimensions, compositions, chemical structures, levels of foaming, melt temperatures, and/or other properties of interest.

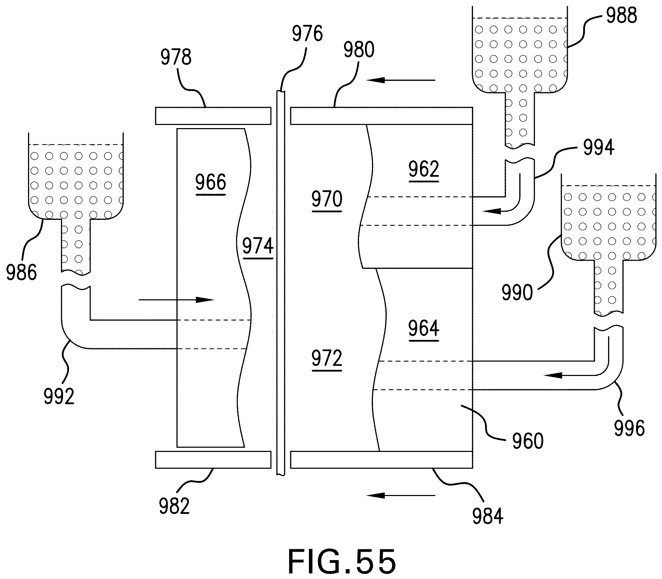

FIG. 55 illustrates a mold configuration that can be used in a molding process that combines a double crack with a double-sided crack process. Mold cavities 970, 972, 974 are defined by mold portions 960, 966, element 976, and securing components 978, 980, 982, 984. As shown mold portion 960 includes subparts 962, 964. As shown multiple hoppers 986, 988, 990 provide particles into mold cavities 970, 972, 974 via inlets 992, 994, 996. In this manner, different particle materials may be delivered into the different cavities. For example, particle materials that are delivered to a particular cavity may be selected for specific properties of the particle materials. Delivery of the particle materials may occur under pressure. Combining a double crack with a double-sided crack process may provide an ability to tune properties in an article. For example, a midsole may have a number zones having different properties. In a particular embodiment, a midsole may have regions having different levels of cushioning and energy return.

The described methods may be automated to a large degree that allows a cost-effective and efficient production. Different arrangements of the components depicted in the drawings or described above, as well as components and steps not shown or described are possible. Similarly, some features and sub-combinations are useful and may be employed without reference to other features and sub-combinations.

The invention is further described by the following numbered paragraphs:
1. A midsole comprising:
   a first particle foam section having a first value for a predetermined property; and
   a second particle foam section having a second value for a predetermined property; and
   an element positioned proximate at least one of the particle foam sections;
   wherein at least a portion of the first particle foam section and the second particle foam section are coupled to each other by fused particles.
2. The midsole of paragraph 1, wherein at least a portion of the element is positioned within at least one of the first particle foam section or the second particle foam section.
3. The midsole of paragraph 1 or 2, wherein at least a portion of the element is positioned at an interface between the first particle foam section and the second particle foam section.
4. The midsole of any one of the preceding paragraphs, wherein the element comprises at least one of a plate, a textile, a rod, a film, a foil, a conductive element, an electronic component, a sensor, an optical sensor, an electrode, a near field communication tag, a chip, a pressure sensor, a flexible display, a control panel, an LED, or a battery.
5. The midsole of any one of the preceding paragraphs, wherein the first and second particle foam sections comprise a predetermined level of fusion.
6. The midsole of any one of the preceding paragraphs, wherein the predetermined property is at least one of a density, a bending stiffness, a compression stiffness, an energy return, a rigidity, a bonding property, a tear strength, a peel strength, an abrasion resistance, a weight and/or a deformation characteristic.
7. The midsole of any one of the preceding paragraphs, wherein the element comprises a plate positioned at a mold interface of the first particle foam section and the second particle foam section.
8. The midsole of any one of the preceding paragraphs, further comprising one or more voids in at least one of the first particle foam section or the second particle foam section.
9. An article comprising:
   an expanded particle foam part; and
   at least one element positioned at a predetermined location at least partially within the foam part.
10. The article of paragraph 9, wherein the at least one element is fully embedded in the foam part.
11. The article of paragraph 9 or 10, wherein the at least one element comprises a first element and a shielding element positioned proximate the first element in the article.
12. The article of paragraph 11, wherein the shielding element reduces heat exposure to the first element.
13. The article of paragraph 11 or 12, wherein the shielding element reduces water exposure to the first element.
14. The article of any one of paragraphs 11 to 13, wherein the shielding element reduces pressure to the first element.
15. The article of any one of paragraphs 11 to 14, wherein the shielding element reduces or prevents an electromagnetic field from contacting the first element.
16. The article of any one of the preceding paragraphs 9 to 15, wherein the foam part comprises a first particle foam section having a first value for a predetermined property; and a second particle foam section having a second value for a predetermined property.
17. A method of manufacturing an article from foam particles, comprising:
   placing an element comprising engaging structures into a mold between a first portion and a second portion of the mold,
   positioning a securing component proximate the element in the mold such that the securing component reduces movement of the element,
   loading particles into the cavity at a first side and a second side of the element,
   moving the first portion and the second portion of the mold into a closed position, and
   providing energy to the mold such that at least a portion of the particles are fused.
18. The method of paragraph 17, wherein the element comprises at least one of a plate, a textile, a rod, a film, a foil, a conductive element, an electronic component, a sensor, an optical sensor, an electrode, a near field communication tag, a chip, a pressure sensor, a flexible display, a control panel, an LED, or a battery.
19. The method of paragraph 17 or 18, wherein the first portion and the second portion of the mold move independently of each other.
20. The method of any one of the preceding paragraphs 17 to 19, further comprising coupling a positioning component to the element and at least one of a securing component, a mold portion, a mold, a column, or a pin.
21. The method of any one of the preceding paragraphs 17 to 20, wherein at least one of the first portion and the second portion further comprises one or more members to engage the element.
22. The method of any one of the preceding paragraphs 17 to 21, wherein one or more engaging structures are located on at least one of an outer portion of the element or an inner portion of the element.
23. The method of any one of the preceding paragraphs 17 to 22, wherein the securing component comprises at least one rim element.
24. The method of any one of the preceding paragraphs 17 to 23, wherein the securing component includes features to receive at least one engaging structure or positioning component.
25. The method of any one of the preceding paragraphs 17 to 24, wherein the element comprises a plate and at least one of the first portion or the second portion comprises one or more pins and wherein placing the plate into the mold further comprises aligning at least one of the engaging structures with the one or more pins, and wherein at least one of the first portion and second portion of mold moves independently of the plate.
26. The method of any one of the preceding paragraphs 17 to 25, further comprising adding a primer before moving the first portion and the second portion of the mold into a closed position.
27. The method of any one of the preceding paragraphs 17 to 26, wherein the particles are fused using at least one of heated steam or electromagnetic radiation.
28. The method of any one of the preceding paragraphs 17 to 27, wherein at least one of the surfaces of the one or more of the mold portions is porous and wherein providing energy comprises providing steam to the mold.
29. The method of any one of the preceding paragraphs 17 to 28, wherein the element is held in place in the mold using vacuum pressure.
30. The method of any one of the preceding paragraphs 17 to 29, further including placing a second element into the mold.
31. The method of any one of the preceding paragraphs 17 to 30, wherein loading the particles further comprises:
   loading a first type of particles having a first set of characteristics into a first cavity portion; and
   loading a second type of particles having a second set of characteristics into a second cavity portion.
32. A shoe comprising:
   an upper;
   a particle foam midsole coupled to the upper comprising:
      one or more elements embedded in the midsole; and
   an outsole.
33. A shoe comprising:
   an upper;
   a particle foam midsole having a peel strength greater than about 3 N/mm width and
   coupled to the upper comprising:
      one or more elements embedded in the midsole; and
      an outsole.
34. A shoe comprising:
   an upper;
   a particle foam midsole coupled to the upper comprising:
      one or more stiffening elements embedded in the midsole;
      at least one textile, film, or foil element; and
      an outsole.
35. A shoe comprising:
   an upper;
   a particle foam midsole coupled to the upper comprising at least one textile, film, or foil element; and
   an outsole;
   wherein the at least one textile, film, or foil element is coupled to a surface of at least one of the upper, the midsole, or the outsole.
36. A shoe comprising:
   an upper;
   a particle foam midsole coupled to the upper comprising:
      one or more elements positioned in the midsole;
      a void proximate some of the one or more elements; and
      an outsole.
37. A shoe comprising:
   an upper;
   a particle foam midsole coupled to the upper comprising:
      an element comprising threads positioned in the midsole;
      a void proximate the element wherein the provides access to the element; and
   a spike comprising complimentary threads coupled to the element;
   an outsole;
   wherein a portion of the spike extends from the element through the void to an external surface of the outsole.

Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the claims below.

## Claims

1. A midsole (436, 450, 462, 470, 490, 550, 600, 700, 764, 790) comprising:
a first particle foam section having a first value for a predetermined property; and
a second particle foam section having a second value for a predetermined property; and
one or more elements positioned proximate at least one of the particle foam sections;
wherein at least a portion of the first particle foam section and the second particle foam section are coupled to each other by fused particles (154).

2. The midsole (436, 450, 462, 470, 490, 550, 600, 700, 764, 790) of claim 1, wherein at least a portion of the element is positioned within at least one of the first particle foam section, the second particle foam section, or at an interface between the first particle foam section and the second particle foam section.

3. The midsole (436, 450, 462, 470, 490, 550, 600, 700, 764, 790) of claim 1 or 2, wherein at least a portion of the element is positioned at an interface between the first particle foam section and the second particle foam section.

4. The midsole (436, 450, 462, 470, 490, 550, 600, 700, 764, 790) of any one of the preceding claims, wherein the element comprises at least one of a support structure, a rod, a torsion bar, a plate, a cage, a frame, a cap, a textile (332), a film, a foil, a strand, a filament, an external object engager, an electronic component, a transmitter, an electrode, a sensor, a display, a control panels, an LED, a battery, a conductive element, a shielding element, a cushioning element, a tag, a chip, and a microprocessor.

5. The midsole (436, 450, 462, 470, 490, 550, 600, 700, 764, 790) of any one of the preceding claims, wherein the predetermined property is at least one of a density, a bending stiffness, a compression stiffness, an energy return, an amount of fusion, a rigidity, a bonding property, a tear strength, a peel strength, an abrasion resistance, a weight and/or a deformation characteristic.

6. The midsole (436, 450, 462, 470, 490, 550, 600, 700, 764, 790) of any one of the preceding claims, wherein the element comprises a plate positioned at a mold interface of the first particle foam section and the second particle foam section, and/or
wherein the element is fully embedded in the midsole (436, 450, 462, 470, 490, 550, 600, 700, 764, 790).

7. The midsole (436, 450, 462, 470, 490, 550, 600, 700, 764, 790) of any one of the preceding claims, further comprising one or more voids in at least one of the first particle foam section or the second particle foam section.

8. An article (342, 746, 780, 814) comprising:
an expanded particle foam part; and
at least one element positioned at a predetermined location such that the element is fully embedded in the foam part,
wherein preferably the foam part comprises a first particle foam section having a first value for a predetermined property; and a second particle foam section having a second value for a pre-determined property.

9. A method (140) of manufacturing an article (342, 746, 780, 814) from foam particles (154), comprising:
placing an element comprising engaging structures (274) into a mold (98, 144, 352, 802, 900) between a first portion and a second portion of the mold (98, 144, 352, 802, 900),
positioning a securing component proximate the element in the mold (98, 144, 352, 802, 900) such that the securing component reduces movement of the element,
loading particles (154) into the cavity at a first side and a second side of the element,
moving the first portion and the second portion of the mold (98, 144, 352, 802, 900) independently of each other such that the first and second portions are in a closed position, and
providing energy to the mold (98, 144, 352, 802, 900) such that at least a portion of the particles (154) are fused.

10. The method (140) of claim 9, wherein the element comprises at least one of a support structure, a rod, a torsion bar, a plate, a cage, a frame, a cap, a textile (332), a film, a foil, a strand, a filament, an external object engager, an electronic component, a transmitter, an electrode, a sensor, a display, a control panels, an LED, a battery, a conductive element, a shielding element, a cushioning element, a tag, a chip, and a microprocessor.

11. The method (140) of claim 9 or 10, further comprising a positioning component (710, 732, 734, 744, 760, 792, 800) that engages the element and at least one of the securing component, the first mold portion, the second mold portion (146), a column, or a pin.

12. The method (140) of any one of the preceding claims 9 to 11, wherein the at least one of the first mold portion or the second mold portion (146) comprises a subpart, and/or
wherein the at least one of the first mold portion or the second mold portion (146) comprises two or more subparts (852, 854, 856, 918, 920, 962, 964) wherein each of the subparts (852, 854, 856, 918, 920, 962, 964) has a different crack height.

13. The method (140) of any one of the preceding claims 9 to 12, further comprising adding a primer before moving the first portion and the second portion of the mold (98, 144, 352, 802, 900) into a closed position.

14. The method (140) of any one of the preceding claims 9 to 13, wherein the particles (154) are fused using at least one of heated steam or electromagnetic radiation, and/or further comprising maintaining a position of the element using vacuum pressure, and/or further including placing a second element into the mold (98, 144, 352, 802, 900).

15. The method (140) of any one of the preceding claims 9 to 14, wherein loading the particles (154) further comprises:
loading a first type of particles (154) having a first set of characteristics into a first cavity portion; and
loading a second type of particles (154) having a second set of characteristics into a second cavity portion.
